# EUROPÄISCHE PATENTSCHRIFT

(11) **EP 3 995 690 B1**
(45) Veröffentlichungstag und Bekanntmachung des Hinweises auf die Patenterteilung: **03.05.2023**
(21) Anmeldenummer: 21206316.8
(22) Anmeldetag: 03.11.2021
(51) Int. Cl.: F03D 7/02, F03D 9/25

(54) **VERFAHREN ZUM PROJEKTIEREN EINES WINDPARKS**
METHOD FOR PROJECT DESIGN FOR A WIND FARM
PROCÉDÉ DE CONCEPTION D'UN PARC ÉOLIEN

(30) Priorität: 04.11.2020 DE 102020129104
(43) Veröffentlichungstag der Anmeldung: 11.05.2022
(73) Patentinhaber: Wobben Properties GmbH, 26607 Aurich (DE)
(72) Erfinder: Scheit, Christoph, 26607 Aurich (DE); Wortelker, Rainer, 26725 Emden (DE); Noffke, Nils, 26607 Aurich (DE)
(74) Vertreter: Eisenführ Speiser

(56) Entgegenhaltungen:
- EP-A1- 2 508 750
- DE-A1-102019 108 300
- US-A1- 2010 138 201

## Beschreibung

Die vorliegende Erfindung betrifft ein Verfahren zum Ermitteln eines Ertrags eines mehrere Windenergieanlagen aufweisenden Windparks. Außerdem betrifft die vorliegende Erfindung ein Verfahren zum Projektieren einen entsprechenden Windpark.

Windparks sind allgemein bekannt, in ihnen werden mehrere Windenergieanlagen zusammengefasst. Das bedeutet besonders, dass die Windenergieanlagen des Windparks über einen gemeinsamen Netzanschlusspunkt in ein elektrisches Versorgungsnetz einspeisen.

Das Projektieren eines solchen Windparks ist eine komplexe Aufgabe. Besonders sind die über ein Jahr zu erwartenden Windbedingungen zu berücksichtigen und davon abhängig ein zu erwartender Ertrag zu ermitteln und die Windenergieanlagen auszuwählen und auch die Standorte der Windenergieanlagen auszuwählen. Dabei ist auch die Positionierung der Windenergieanlagen innerhalb des Windparks zu berücksichtigen und damit die Positionierung jeder Windenergieanlage in Bezug auf eine oder mehrere übrige Windenergieanlagen im Windpark.

Um das durchzuführen wird der zukünftige Standort des Windparks vermessen, insbesondere auch hinsichtlich zu erwartender Windverhältnisse. Häufig wird zu diesem Zweck zunächst ein Windmast, oder mehrere Windmasten, in dem Park aufgestellt und damit Windverhältnisse bzw. andere atmosphärische Bedingungen, also insbesondere Windgeschwindigkeit, Dichte, Windrichtung, Veer und Turbulenzintensität aufgenommen. Idealerweise erfolgt das wenigstens über ein Jahr. Der Windmessmast kann dann nach Errichtung des Windparks wieder abgenommen werden oder auch im Windpark verbleiben.

Neben Windverhältnissen wird regelmäßig auch die Topografie des Standorts berücksichtigt, insbesondere, ob der Standort flach ist oder Höhenunterschiede aufweist und ob Hindernisse im Bereich des zukünftigen Windparks stehen, die den Wind beeinflussen können, wie beispielsweise Gebäude, Bäume oder auch Waldabschnitte.

Wenigstens basierend auf diesen Daten kann dann ein Windpark konzeptionell zusammengestellt werden und in einer Simulation der zu erwartende Ertrag ermittelt werden.

In einer solchen Simulation wird dann idealerweise der Verlauf eines vollständigen Jahres durchsimuliert. Es kommt aber auch in Betracht, dass anstatt einer vollständigen Simulation des gesamten Jahres lediglich verschiedene auftretende Situationen simuliert werden, und die dabei ermittelten Teilbeträge unter Berücksichtigung der Häufigkeiten der jeweiligen Situation zu einem Jahresertrag zusammengerechnet werden. Zur anschaulichen Erläuterung ist aber die Annahme einer vollständigen Simulation über das gesamte Jahr anschaulicher. Dazu kann eine Wetterprognose zugrunde gelegt werden. Eine solche Wetterprognose ist von einer Wettervorhersage zu unterscheiden. Bei einer solchen Wetterprognose geht es darum, besonders für ein Jahr einen erwarteten Wetterverlauf zugrunde zu legen. Ein solcher Wetterverlauf kann beispielsweise die Situation eines vollständigen Jahres genauso widerspiegeln wie der Windmessmast ihn aufgenommen hat. Durch eine solche Simulation über ein komplettes Jahr kann dann die Energieproduktion für dieses Jahr ermittelt werden, die auch als AEP ("Annual Energy Production") bezeichnet wird und den Ertrag des Windparks bezeichnet. Dabei kommt es somit nur auf das Endergebnis des Jahres an, nicht aber darauf, wie viel Leistung tatsächlich an welchem Tag oder in welcher Stunde erzeugt wurde, denn das kann derzeit für ein gesamtes Jahr allenfalls ungenau vorhergesagt werden.

Bei der Windprognose geht es vielmehr darum, dass die typischen Windverhältnisse zumindest statistisch einfließen. Wenn der Windmessmast also beispielsweise am 5., 17. und 24. Oktober einen Sturm erfasst hat, kann dieses für die Jahresproduktion berücksichtigt werden, indem - anschaulich gesprochen - von drei Stürmen im Oktober ausgegangen wird. An welchen Tagen diese Stürme dann tatsächlich auftreten, oder ob vielleicht nur zwei auftreten und dafür im September einer mehr, spielt für die Jahresenergieproduktion keine Rolle.

Mit anderen Worten lässt sich aus dem aufgenommenen Verlauf der Windverhältnisse über ein Jahr auch für ein anderes Jahr gut auf die insgesamt zu erwartende Energieproduktion, also den Ertrag, schließen, auch wenn der konkrete Verlauf in dem anderen Jahr sicherlich anders aussehen wird.

Jedenfalls kann eine Simulation basierend auf einer solchen Wetterprognose für einen langen Zeitraum, also insbesondere für ein Jahr, jeweils Leistungserzeugungen der Windenergieanlagen und damit des Windparks erfassen und zur Jahresenergieproduktion aufintegrieren. Dabei berücksichtigt die Simulation das Verhalten der Windenergieanlagen und auch den Einfluss der Topografie des Geländes. Die Simulation berücksichtigt auch, dass der Windpark selbst die Windverhältnisse beeinflusst. Dazu gehört, dass insgesamt die Windgeschwindigkeit durch den Windpark selbst abnimmt. Dazu gehört aber auch, dass im konkreten Fall in Abhängigkeit von der Windrichtung manche Windenergieanlagen in Luv anderer Windenergieanlagen stehen und dadurch weniger Leistung erzeugen können. Außerdem gehört dazu, dass die Turbulenzintensität im Nachlauf einer Windenergieanlage erhöhte Werte aufweist.

Zusätzlich ist es aber so, dass auch Vorschriften beachtet werden müssen. Eine Anforderung kann sein, dass der Windpark oder einige seiner Windenergieanlagen situationsabhängig gedrosselt betrieben werden müssen, um eine zu hohe Schallimmission an relevanten Punkten zu vermeiden.

Beispielsweise kann zu bestimmten Zeiten, z. B. nachts, an einem bestimmten Immissionspunkt, z. B. an einem nahegelegenen Wohngebäude, ein maximaler Schallpegel, der auch als Schalldruckpegel bezeichnet werden kann, an einem Wohnhaus vorgegeben sein. Das kann dazu führen, dass eine, mehrere oder gegebenenfalls sogar alle Windenergieanlagen des Windparks gedrosselt betrieben werden müssen, um diesen Schallgrenzwert einzuhalten. Eine solche Abregelung kann somit zu einer Leistungseinbuße führen und das wiederum kann sich in dem Wert der jährlichen Energieproduktion widerspiegeln. Entsprechend wäre es vorteilhaft, auch diese Abregelung der Windenergieanlage oder Windenergieanlagen bei der Simulation mit zu berücksichtigen. Davon kann beispielsweise auch die Wahl der Windenergieanlage abhängen, oder die Wahl von Details der Windenergieanlage.

Besonders problematisch hierbei kann aber sein, dass solche Schallimmissionen schwer vorhergesagt werden können. Selbst wenn die Simulation aus den Winddaten der Windprognose einen Betrieb der Windenergieanlage simulieren können und gegebenenfalls sogar eine Schallabgabe ermitteln können, so kann es dennoch schwierig sein, eine Vorhersage über die Schallimmission am Immissionspunkt zu treffen. Hierbei ist besonders zu berücksichtigen, dass die Ausbreitung des Schalls von der Windenergieanlage bzw. mehreren Windenergieanlagen zum Immissionspunkt wenig bekannt und auch schwankend sein kann.

Das Deutsche Patent- und Markenamt hat in der Prioritätsanmeldung zur vorliegenden Anmeldung folgenden Stand der Technik recherchiert: DE 10 2015 112 597 A1, US 2019 / 0 154 000 A1 und DE 10 2019 108 300 A1 und DE 10 2019 116 753 A1.

Der vorliegenden Erfindung liegt somit die Aufgabe zugrunde, zumindest eins der oben genannten Probleme zu adressieren. Insbesondere soll eine Lösung vorgeschlagen werden, bei der bei der Projektierung eines Windparks Schallimmissionen an wenigstens einem Immissionspunkt derart berücksichtigt werden, dass der Windpark in der Simulation möglichst so betrieben wird, dass Grenzwerte an einem solchen Immissionspunkt möglichst eingehalten werden. Es soll also die maximal mögliche Leistungsproduktion unter Einhaltung der Grenzwerte simuliert werden. Zumindest soll zu bisher bekannten Lösungen eine alternative Lösung vorgeschlagen werden.

Erfindungsgemäß wird ein Verfahren nach Anspruch 1 vorgeschlagen. Somit wird ein Verfahren zum Vorhersagen eines Ertrags eines mehrere Windenergieanlagen aufweisenden Windparks vorgeschlagen, also das Ermitteln eines zu erwartenden Ertrags. Besonders wird das Ermitteln eines zu erwartenden Ertrags einer geplanten Windenergieanlage vorgeschlagen. Jede Windenergieanlage des bestehenden oder erst noch zu errichtenden Windparks weist einen Rotor auf mit variabler Rotordrehzahl und in ihrem Blattwinkel verstellbaren Rotorblättern. Bei jeder Windenergieanlage wird eine Abgabeleistung oder ein Drehmoment mittels einer Einstellkennlinie eingestellt. Dazu ist eine Anlagensteuerung vorgesehen. Die Einstellkennlinie kann als Drehzahl-/Leistungskennlinie oder als Drehzahl-/Drehmomentkennlinie ausgebildet sein. All diese Funktionen sind als solche zu verstehen, die in dem Windpark ausgeführt werden, sobald er errichtet ist und betrieben wird. Sie werden aber in der Simulation als Verhalten der Windenergieanlagen berücksichtigt.

Die Drehzahl-/Leistungskennlinie gibt einen Zusammenhang zwischen einer erfassten Rotordrehzahl und einer dazu einzustellenden Leistung vor. Um die Windenergieanlage mittels der Einstellkennlinie zu steuern, wird somit die Drehzahl erfasst und aus der Kennlinie ein zugehöriger Leistungswert abgelesen. Die Abgabeleistung der Windenergieanlage wird dann so eingestellt wie durch diesen abgelesenen Leistungswert vorgegeben ist. Dabei kann es sein, dass die eingestellte Abgabeleistung geringer ist als die Leistung, die aus dem Wind erzeugt werden könnte. Das würde dann dazu führen, dass der Rotor beschleunigt wird. Dann stellt sich eine neue Drehzahl ein und es wird aus der Einstellkennlinie ein neuer Leistungswert ermittelt und die Abgabeleistung entsprechend eingestellt, dann nämlich mit einem höheren Leistungswert. Das wird solange wiederholt, bis ein Arbeitspunkt gefunden wird, in dem die eingestellte Abgabeleistung der aus dem Wind entnommenen Leistung entspricht. Verlustleistungen werden bei dieser Erläuterung der Einfachheit halber vernachlässigt.

Alternativ ist die Einstellkennlinie als Drehzahl-/Drehmomentkennlinie ausgebildet. Sie wird aber ganz ähnlich wie die Drehzahl-/Leistungskennlinie verwendet. Bei der Drehzahl-/Drehmomentkennlinie wird ebenfalls die aktuelle Drehzahl erfasst und dazu in der Einstellkennlinie, also der Drehzahl-/Drehmomentkennlinie, ein zugehöriger Drehmomentwert abgelesen und das Drehmoment entsprechend eingestellt. Dieses Drehmoment wirkt dann wieder dem Drehmoment entgegen, das durch den Wind ausgeübt wird, und wenn es dabei kein Gleichgewicht gibt, wird sich die Drehzahl entsprechend erhöhen oder verringern und damit ergibt sich aus der Drehzahl-/Drehmomentkennlinie wieder ein neuer Drehmomentwert, der eingestellt wird, bis ein stabiler Arbeitspunkt gefunden wird.

Weiterhin wird jeweils wenigstens ein variabler Übertragungszusammenhang für Schall berücksichtigt, der vereinfachend auch nur als Übertragungszusammenhang bezeichnet wird. Dieser Übertragungszusammenhang beschreibt einen Zusammenhang zwischen einem von der Windenergieanlage ausgehenden Schallsignal und einer an einem Immissionspunkt resultierenden Schallimmission. Ein solcher Übertragungszusammenhang kann beispielsweise durch Vor-Ort-Messung ermittelt werden oder durch Simulationen ermittelt werden. Es kommt auch in Betracht, dass ein solcher Übertragungszusammenhang aus einem existierenden Windpark auf einen zu planenden Windpark hochgerechnet wird.

Außerdem werden prognostizierte Wetterparameter berücksichtigt, wobei die Wetterparameter klassifiziert werden, nämlich in für einen Betrieb der Windenergieanlage relevante Betriebs-Wetterparameter und in für eine Schallausbreitung relevante Ausbreitungs-Wetterparameter. Dadurch kann eine klare Einteilung der Wetterparameter vorgenommen werden.

Es wurde dabei erkannt, dass manche Parameter, wie z.B. die Windgeschwindigkeit, besonders den unmittelbaren Betrieb der Windenergieanlage beeinflussen oder bestimmen. Bekanntlich erzeugt eine Windenergieanlage umso mehr Leistung, je größer die Windgeschwindigkeit ist. Andere Parameter, wie bspw. ein Maß einer Schichtung kalter und warmer Luftmassen, das angibt, wie stark eine solche Schichtung vorliegt, oder nicht vorliegt, wenn die Luftmassen stattdessen durchmischt sind, beeinflussen besonders eine Schallausbreitung, sind also für die Schallausbreitung relevant. Das beispielhaft genannte Maß kann auch als Schichtungsmaß der Atmosphäre bezeichnet werden und ist ein Maß dafür, wie stark die Atmosphäre, im relevanten Bereich der Windenergieanlage, geschichtet ist. Das Schichtungsmaß kann vorzugsweise Werte zwischen 100% und 0% annehmen. Bei 100% liegt eine vollständige Schichtung vor, also eine klare Grenzschicht zwischen zwei Luftmassen, und bei 0% liegt keinerlei Schichtung vor. Mögliche Kriterien oder weitere Beispiele der Klassifizierung werden unten noch beschrieben.

Weiterhin wird vorgeschlagen, dass der Übertragungszusammenhang in Abhängigkeit von wenigstens einem der prognostizierten Ausbreitungs-Wetterparameter bestimmt wird.

Es wurde somit erkannt, dass diese Ausbreitungs-Wetterparameter die Schallausbreitung beeinflussen. Es kommt also bei der Schallimmission nicht nur darauf an, wie viel Schall erzeugt wird, sondern auch, wie stark er sich zum Immissionspunkt ausbreitet. Das hängt von den Ausbreitungs-Wetterparametern ab.

Diese Ausbreitungs-Wetterparameter können über eine Prognose berücksichtigt werden, die solche Zustände für den Prognosezeitraum prognostiziert.

Für die Ermittlung des Ertrags wird insoweit eine entsprechende Kenntnis zugrunde gelegt. Die Kenntnis dieser beschriebenen Zusammenhänge auch abhängig von den Betriebseinstellungen der Windenergieanlage und/oder der Schallabgabe der Windenergieanlage können durch Simulation bestimmt werden oder aus Messungen vergleichbarer Windparks oder vergleichbarer Windenergieanlagen bestimmt oder hochgerechnet werden. Der Übertragungszusammenhang kann also wie beschrieben auch aus Messungen ermittelt werden und er stellt besonders einen Zusammenhang zwischen einem von einer existierenden Windenergieanlage ausgehenden Schallsignal und einer an wenigstens einem existierenden Immissionspunkt resultierenden Schallimmission dar.

Dieser Zusammenhang kann schon bei der Vorhersage des Ertrags, also bei der Ermittlung des zu erwartenden Ertrags eines geplanten Windparks, also auch schon bei der Projektierung berücksichtigt werden. Das kann insbesondere bei der Simulation des zu projektierenden Windparks bereits berücksichtigt werden, also bevor der Windpark aufgebaut ist und damit bevor dieser Übertragungszusammenhang real existiert. Unter Zuhilfenahme von Erfahrungswerten und/oder heutzutage vorliegenden komplexen Wettermodellen kann der Übertragungszusammenhang dennoch erstellt werden, auch in Abhängigkeit von wenigstens einem Ausbreitungs-Wetterparameter.

Weiter wird vorgeschlagen, dass zum Ermitteln des Ertrags eine immissionsabhängige Ertragsprognose für den Windpark erstellt wird. Diese Ertragsprognose prognostiziert einen Ertrag, erstellt also eine Vorhersage des Ertrags, der unter Einhaltung vorgegebener Immissionsgrenzen erzielt werden kann, und die Ertragsprognose wird in Abhängigkeit von wenigstens einem der prognostizierten Betriebs-Wetterparameter mittels eines Prognosemodells erstellt. Die Betriebs-Wetterparameter können durch eine Wetterprognose bestimmt werden bzw. eine Wetterprognose kann die Betriebs-Wetterparameter bilden. Das Prognosemodell modelliert darauf basierend ein Verhalten wenigstens einer der Windenergieanlagen und/oder des Windparks zur Einhaltung der Immissionsgrenzen. Dazu berücksichtigt es auch den Übertragungszusammenhang.

Es wird also eine Ertragsprognose mittels des Prognosemodells erstellt. Insbesondere wird das Verhalten des Windparks mithilfe dieses Prognosemodells simuliert. Eine Wetterprognose, die für den Prognosezeitraum erstellt wird, besonderes für ein Jahr, bildet dafür eine Eingangsinformation. Insbesondere ist vorgesehen, eine Wetterprognose über ein Jahr zu erstellen, z. B. durch Erfassung mittels eines Windmessmasts an dem geplanten Aufstellungsort. Basierend auf dieser Wetterprognose wird dann der zu projektierende Windpark durchsimuliert, insbesondere für den Zeitraum eines Jahres, wenn die Wetterprognose ebenfalls ein Jahr betrifft. Der Vorgang des Simulierens kann natürlich kürzer als ein Jahr sein.

Die Simulation kann auch dadurch ausgeführt werden, dass nur für mögliche, zu erwartende Wettersituationen der Betrieb des Windparks simuliert wird. Solche Wettersituationen können die Betriebs-Wetterparameter und die Ausbreitungs-Wetterparameter berücksichtigen. Es werden dadurch auch Situationen berücksichtigt, bei denen der Windpark, zumindest eine Windenergieanlage des Windparks, gedrosselt betrieben wird, zur Einhaltung einer Vorgabe einer Schallimmission. Sind alle in Betracht kommenden Wettersituationen simuliert, wobei jeweils ein Teilertrag prognostiziert wird, können diese Teilerträge unter Berücksichtigung, wie häufig bzw. lange die jeweils zugeordnete Wettersituation auftreten wird, zu einem insgesamt zu erwartenden Ertrag zusammengerechnet werden.

Dazu wird nun vorgeschlagen, dass das Prognosemodell, das dieser Simulation zugrunde liegt, auch die Einhaltung der Immissionsgrenzen modelliert. Die Simulation bzw. das zugrundeliegende Prognosemodell berücksichtigt also, dass weniger Leistung erzeugt werden kann, wenn eine Schallimmissionsgrenze erreicht wird. Insoweit wird auch dieses Verhalten der geplanten Windenergieanlage bzw. des geplanten Windparks durch das Prognosemodell antizipiert. Dabei wird nicht nur das Verhalten der Windenergieanlage oder des Windparks modelliert, sondern auch der Übertragungszusammenhang berücksichtigt.

Dem liegt die Erkenntnis zugrunde, dass die Schallimmission am Immissionspunkt nicht nur von der Schallabgabe der Windenergieanlage abhängt, sondern auch von dem Übertragungszusammenhang und damit auch von den Ausbreitungs-Wetterparametern, also dem Wetter. Bei gleicher Schallabgabe an einer Windenergieanlage kann es somit an dem Immissionspunkt zu unterschiedlich hoher Schallimmission kommen. Damit kann es abhängig von dem Übertragungszusammenhang zu einer Schallimmission kommen, die über einem Grenzwert liegt bzw. einen Grenzwert erreicht, oder unter dem Grenzwert.

Liegt die Schallimmission an dem Immissionspunkt unter einem Grenzwert und wird die Windenergieanlage gedrosselt betrieben, so kann diese Drosselung zurückgenommen werden, zumindest teilweise. Hier wird angenommen, dass ein solcher Fall dadurch auftreten kann, dass wetterabhängig, bzw. abhängig von einem Zustand der Erdatmosphäre, nämlich abhängig von wenigstens einem Ausbreitungs-Wetterparameter, ein Übertragungszusammenhang vorliegt, der zu einem vergleichsweise geringen Immissionswert an dem Immissionspunkt führt. Durch Berücksichtigung dieses Übertragungszusammenhangs in dem Prognosemodell kann diese wetterabhängige geringere Immission antizipiert werden. Gleichzeitig kann antizipiert werden, dass die Steuerung der Windenergieanlage, wenn der projektierte Windpark also in Betrieb geht, so darauf reagiert, dass die Leistung angehoben werden kann.

Das Ergebnis ist somit, dass die Ertragsprognose genauer werden kann, wenn der Übertragungszusammenhang berücksichtigt wird und dabei berücksichtigt wird, dass dieser von einem Zustand der Erdatmosphäre abhängt, nämlich von einem oder mehreren Ausbreitungs-Wetterparametern.

Vorzugsweise können die prognostizierten Wetterparameter in drei Kategorien klassifiziert werden, nämlich in für einen Betrieb der Windenergieanlage relevante Betriebs-Wetterparameter, für eine Schallausbreitung relevante Ausbreitungs-Wetterparameter, und in für eine Schallabstrahlung relevante Abstrahl-Wetterparameter. Vorzugsweise bilden die Abstrahl-Wetterparameter eine Untergruppe der Betriebs-Wetterparameter.

Gemäß einer Ausführungsform wird vorgeschlagen, dass für die Simulation der Anlagenbetrieb in Abhängigkeit der Betriebs-Wetterparameter bestimmt wird und der Übertragungszusammenhang in Abhängigkeit von den Ausbreitungs-Wetterparametern. Es können aber jeweils auch prognostizierte Wetterparameter für beides herangezogen werden, also für die Bestimmung des Anlagenbetriebs und für die Bestimmung des Übertragungszusammenhangs. Es ist auch möglich, dass weitere Parameter für beides berücksichtigt werden, die keiner Kategorie zugeordnet sind, also weder einen Betriebs-Wetterparameter noch einen Ausbreitungs-Wetterparameter bilden. Hierzu gehören Stabilitätsparameter, die die Stabilität atmosphärischer Eigenschaften kennzeichnen, besonders die Stabilität einer Bewölkung, und die Stabilität einer Sonneneinstrahlung.

Gemäß einer Ausführungsform wird vorgeschlagen, dass der Übertragungszusammenhang zusätzlich in Abhängigkeit von einer Richtcharakteristik bestimmt wird, und/oder dass er in Abhängigkeit von wenigstens einer Betriebseinstellung der Windenergieanlage und/oder einer Schallabgabe der Windenergieanlage bestimmt wird.

Eine Richtcharakteristik bestimmt besonders, in welche Richtung der Schall mit welcher Intensität abgestrahlt wird. Eine besonders hohe Abstrahlung liegt in einer Richtung quer zu einer Rotorfläche vor, also quer zu einer Fläche, die die Rotorblätter im Betrieb der Windenergieanlage überstreichen. Das ist somit in Windrichtung und dabei sowohl mit dem Wind als auch gegen den Wind. Die Richtcharakteristik ist somit nicht damit zu verwechseln, dass der Wind den Schall weiterträgt, was allerdings noch hinzukommen kann. Ebenso ist die Schallabgabe in einer Rotorebene, also eine Ebene, in der die Rotorfläche liegt, geringer. Das kann durch die Berücksichtigung der Richtcharakteristik berücksichtigt werden.

Gemäß einer Ausführungsform wird vorgeschlagen, dass eine Wetterprognose erstellt oder empfangen wird und aus der Wetterprognose Betriebs-Wetterparameter und Ausbreitungs-Wetterparameter abgeleitet werden. Eine Wetterprognose kann hier besonders für einen Prognosezeitraum von bspw. einem Jahr erstellt werden. Als Wetterprognose kann ein Wetterverlauf eines vergangenen Jahres verwendet werden. Es wird dabei vorgeschlagen, die Parameter der Wetterprognose zu klassifizieren, nämlich in Betriebs-Wetterparameter und Ausbreitungs-Wetterparameter.

Gemäß einer Ausführungsform wird vorgeschlagen, dass Betriebs-Wetterparameter wenigstens als Parameter eine mittlere Windgeschwindigkeit, eine Turbulenzintensität, und/oder eine Luftdichte, umfassen. Es wurde erkannt, dass diese Parameter besonders den Betrieb und/oder die Schallabgabe der Windenergieanlage beeinflussen.

Außerdem oder alternativ wird vorgeschlagen, dass Ausbreitungs-Wetterparameter wenigstens als Parameter eine Windscherung, eine Windrichtung, eine relative Feuchte, eine Lufttemperatur, einen Temperaturgradienten der Lufttemperatur und/oder ein Schichtungsmaß der Atmosphäre umfassen. Es wurde erkannt, dass diese Parameter besonders die Ausbreitung des Schalls beeinflussen. Als weitere Ausbreitungs-Wetterparameter kommen in Betracht, ob Low-Level-Jet und Strahlungstage vorliegen.

Gemäß einer Ausführungsform wird vorgeschlagen, dass für den vorhergesagten Ertrag durch Unsicherheiten zu erwartende Abweichungen quantifiziert werden, wobei die Quantifizierung der durch Unsicherheiten zu erwartenden Abweichungen wenigstens in Abhängigkeit vom Übertragungszusammenhang bestimmt wird. Es wurde somit erkannt, dass nicht allein der vorhergesagte Ertrag wichtig sein kann, sondern dass dieser eine bessere Aussagekraft haben kann, wenn eingeschätzt werden kann, wie gut die Vorhersage ist und/oder in welchem Bereich Abweichungen zu erwarten sind.

Es wurde erkannt, dass diese Quantifizierung auch von dem Übertragungszusammenhang abhängt, weil der Übertragungszusammenhang schwanken kann und/oder ungenau sein kann, und weil auch die Wetterprognose, die dem Übertragungszusammenhang zu Grunde liegt, besonders über die Ausbreitungs-Wetterparameter, ungenau sein kann. Daher wird vorgeschlagen, den Übertragungszusammenhang bei der Quantifizierung zu berücksichtigen. Besonders wird vorgeschlagen, die Ausbreitungs-Wetterparameter zu berücksichtigen.

Vorzugsweise wird vorgeschlagen, dass wenigstens eine der folgenden Quantifizierungsmethoden gewählt wird.

Gemäß einer Quantifizierungsmethode wird für den vorhergesagten Ertrag eine Ertragsunsicherheit bestimmt, die einen Unsicherheitsbereich angibt, um den ein tatsächlich erzeugter Ertrag maximal von dem vorhergesagten Ertrag mit einer vorbestimmbaren Wahrscheinlichkeit abweichen kann. Beispielsweise kann als vorbestimmte Wahrscheinlichkeit ein Wert von 90% angegeben werden. Dann liegt der tatsächliche Ertrag zu 90% in dem Unsicherheitsbereich, überschreitet ihn also nur mit einer Wahrscheinlichkeit von 10%. Diese Unsicherheit kann dadurch bestimmt werden, dass bekannte Unsicherheiten der Eingangsdaten, besonders der prognostizierten Wetterdaten, wie Unsicherheiten der Ausbreitungs-Wetterparameter, in die Bestimmung des Ertrags einfließen.

Gemäß einer Quantifizierungsmethode wird für den vorhergesagten Ertrag eine Erwartungswahrscheinlichkeit bestimmt, die angibt mit welcher Wahrscheinlichkeit der tatsächlich erzeugte Ertrag wenigstens den vorhergesagten Ertrag erzielt. Der bestimmte, also vorhergesagte Ertrag ist eine Energiemenge, die vorhergesagt wird. Erzeugt der Windpark oder wenigstens eine Windenergieanlage zu viel Schallimmission, kann es sein, dass weniger Energie als vorhergesagt erzeugt werden kann. Um keine falschen Erwartungen zu wecken, kann dann ein geringerer Ertrag angegeben werden. Je geringer der Ertrag ist, der dann als Vorhersage angegeben wird, umso höher die Wahrscheinlichkeit, dass er tatsächlich erreicht oder überschritten wird. Das kann durch die Erwartungswahrscheinlichkeit beziffert werden, nämlich wie wahrscheinlich es ist, wenigstens den vorhergesagten Wert zu erreichen, oder einen höheren. Auch hier können bekannte Unsicherheiten der Eingangsdaten in die Bestimmung des Ertrags und dadurch in die Bestimmung dieser Erwartungswahrscheinlichkeit einfließen.

Gemäß einer Quantifizierungsmethode wird genau umgekehrt vorgegangen, indem eine Erwartungswahrscheinlichkeit vorgegeben wird, für die der vorherzusagende Ertrag bestimmt wird. Bspw. soll der vorhergesagte Ertrag zu wenigstens 90% erreicht oder überschritten werden. Es kann, wieder ausgehend von Unsicherheiten der Eingangsdaten, bestimmt werden, welcher Ertrag welche Erwartungswahrscheinlichkeit hat. Es können viele solcher Paare bestimmt werden. Davon kann dann der Ertrag ausgewählt werden, der die vorgegebene Erwartungswahrscheinlichkeit aufweist.

Gemäß einer Quantifizierungsmethode wird eine Vorhersagegüte bestimmt, die ein Maß ist, mit welcher Wahrscheinlichkeit der vorhergesagte Ertrag erreicht wird. Hier wird besonders für den Ertrag eine zulässige Abweichung zu Grunde gelegt, denn ein vorhergesagter Wert wird nicht exakter erreicht werden. Diese zulässige Abweichung kann bspw. +/- 5% betragen. Die Vorhersagegüte gibt dann an, mit welcher Wahrscheinlichkeit der tatsächliche Ertrag den vorhergesagten Ertrag auf 5% genau erreicht. Auch hier können bekannte Unsicherheiten der Eingangsdaten zur Berechnung verwendet werden.

Gemäß einer Quantifizierungsmethode wird für den vorhergesagten Ertrag ein Schwankungsmaß, insbesondere eine Standardabweichung oder Varianz, bestimmt, das ein Maß für eine zu erwartende Schwankung des tatsächlich erzeugten Ertrags um den vorhergesagten Ertrag ist. Besonders die Standardabweichung oder Varianz wird hier bevorzugt als Schwankungsmaß verwendet, weil diese Kriterien in der Mathematik geläufig sind und eine vergleichende Aussage zulassen. Auch hier können bekannte Unsicherheiten der Eingangsdaten zur Berechnung verwendet werden.

Es wird gemäß einer Ausführungsform vorgeschlagen, dass das Prognosemodell ein Steuerverhalten der wenigstens einen Windenergieanlage berücksichtigt, demnach in Abhängigkeit von dem Übertragungszusammenhang eine Einstellkennlinie ausgewählt wird. Die Windenergieanlage arbeitet also so, dass in Abhängigkeit von dem Übertragungszusammenhang eine Einstellkennlinie ausgewählt wird und dieses Verhalten ist in dem Prognosemodell implementiert. Hier wurde besonders erkannt, dass die Immission am Immissionspunkt von dem Übertragungszusammenhang abhängt und demnach die Höhe der abzugebenden Leistung, insbesondere die Höhe einer durchzuführenden Drosselung, entsprechend auch von dem Übertragungszusammenhang abhängt. Je nach Wetter kann eine Schallabgabe an der Windenergieanlage stärker oder schwächer übertragen werden, sodass eine höhere oder geringere Schallimmission am Immissionspunkt resultiert. Entsprechend kann zur Einhaltung der Immission am Immissionspunkt die Abgabeleistung einer Windenergieanlage höher oder geringer eingestellt werden und damit hängt diese Einstellung der Abgabeleistung von dem Übertragungszusammenhang ab.

Zur Umsetzung dieser unterschiedlichen Leistungseinstellung wird vorgeschlagen, eine entsprechende Einstellkennlinie auszuwählen. Je nach gewählter Einstellkennlinie wird dann somit zu einer bestimmten Windgeschwindigkeit eine unterschiedliche Abgabeleistung eingestellt. Wird die Drehzahl-/Leistungskennlinie gewählt, wird somit ausdrücklich die Abgabeleistung eingestellt; wird die Drehzahl-/Drehmomentkennlinie verwendet, so wird indirekt über die Einstellung des Drehmomentes die Leistung eingestellt.

Hier wurde besonders erkannt, dass unterschiedliche Übertragungszusammenhänge zu unterschiedlichen Leistungsreduzierungen führen können. Die Übertragungszusammenhänge können mit variierender Windgeschwindigkeit mitunter wenig variieren, sodass in Abhängigkeit von dem Übertragungszusammenhang eine Einstellkennlinie ausgewählt werden kann und diese bei schwankender Windgeschwindigkeit ausgewählt bleiben kann.

Dazu wird vorgeschlagen, dass das Prognosemodell dieses Verhalten implementiert, dieses Verhalten also antizipiert. Zur Projektierung wird somit das Prognosemodell verwendet und darin das Verhalten der Windenergieanlage wiedergegeben, und zwar auch insoweit, als zur Veränderung der Abregelung eine entsprechende Einstellkennlinie ausgewählt wird. Entsprechend wird in dem Prognosemodell somit auch in Abhängigkeit von dem Übertragungszusammenhang, der bei der Projektierung antizipiert wird, eine entsprechende Einstellkennlinie ausgewählt. Dadurch kann dieses Prognosemodell das Verhalten der Windenergieanlage sehr gut nachbilden und entsprechend eine gute Vorhersage für die jährliche Energieproduktion erstellen.

Gemäß einer Ausführungsform wird vorgeschlagen, dass zum Projektieren die immissionsabhängige Ertragsprognose für wenigstens ein Jahr erstellt wird und dass dafür eine Wetterprognose wenigstens für ein Jahr als Prognosezeitraum erstellt wird. Aus der Wetterprognose können die Betriebs-Wetterparameter und die Ausbreitungs-Wetterparameter hervorgehen. Hier wurde besonders erkannt, dass wenigstens der Ablauf eines vollständigen Jahres, alternativ auch der Ablauf mehrerer vollständiger Jahre, zu einer guten Prognose führen kann, und dass auch dafür, das Verhalten in Bezug auf die Schallimmission berücksichtigt werden kann. Es wurde besonders erkannt, dass nicht nur die Windprofile sich über das Jahr verändern, sondern dass auch der Übertragungszusammenhang über das Jahr stark schwanken kann. Der Übertragungszusammenhang hängt ebenfalls vom Wetter ab und dabei können sich auch für den Übertragungszusammenhang jahreszeitlich abhängige Eigenschaften einstellen und/oder Häufigkeiten von Eigenschaften einstellen.

Das kann durch die Betrachtung wenigstens eines vollständigen Jahres als Prognosezeitraum gut berücksichtigt werden.

Gemäß einer Ausführungsform wird vorgeschlagen, dass für die immissionsabhängige Ertragsprognose in einer Simulation über den Prognosezeitraum nach und nach Betriebszustände wenigstens einer Windenergieanlage in Abhängigkeit von der Wetterprognose ermittelt werden, insbesondere in Abhängigkeit von den Ausbreitungs-Wetterparametern, wobei zusätzlich in Abhängigkeit von dem Übertragungszusammenhang berücksichtigt wird, dass an dem wenigstens einen Immissionspunkt die resultierende Schallimmission einen vorgegebenen Immissionsgrenzwert nicht überschreitet, und die Betriebszustände so ermittelt werden, dass der resultierende Immissionsgrenzwert nicht überschritten wird, insbesondere so, dass der resultierende Immissionsgrenzwert erreicht wird.

Für die Ermittlung des Ertrags, besonders für eine Projektierung des Windparks wird somit der Windpark und damit auch einzelne Windenergieanlagen durchsimuliert. Die Eingangsgröße hierfür bildet die Wetterprognose. In Abhängigkeit von der Wetterprognose, besonders in Abhängigkeit von den Betriebs-Wetterparametern, also insbesondere der Windgeschwindigkeit und Windrichtung, werden Betriebszustände ermittelt. Insbesondere eine Drehzahl und eine Abgabeleistung werden ermittelt. Insbesondere ist für eine Windenergieanlage ein Verhalten vorausberechnet und hinterlegt, zu welchen Windgeschwindigkeiten die Windenergieanlage welche Drehzahl aufweist und welche Abgabeleistung sie dabei abgibt. Sofern die Windenergieanlage nicht speziell gedrosselt ist, kann besonders im Teillastbereich, wenn also eine Nennwindgeschwindigkeit noch nicht erreicht ist, aus der Windgeschwindigkeit Drehzahl und Abgabeleistung ohne Weiteres ermittelt werden. Die Windrichtung kann noch dafür relevant sein, ob Hindernisse wie beispielsweise weitere Windenergieanlagen im Windpark die Windgeschwindigkeit an der konkreten Windenergieanlage beeinflussen, insbesondere reduzieren. Insbesondere liegt die Wetterprognose als Wetterprognose für den Windpark vor, und nicht für jede einzelne Windenergieanlage.

Nun werden aber zusätzlich Randbedingungen betrachtet, hier nämlich die Einhaltung wenigstens eines Immissionsgrenzwertes. Die zunächst ohne solche Randbedingungen ermittelten Betriebszustände würden zu einer bestimmten Immission am Immissionspunkt führen. Das könnte in Abhängigkeit von dem Übertragungszusammenhang antizipiert werden. Wäre die Immission an dem Immissionspunkt zu hoch, würde der Betrieb der Windenergieanlage reduziert werden, insbesondere die Drehzahl und Leistung reduziert werden. Genauso verhält sich die Simulation dann auch.

Entsprechend wird in Abhängigkeit von dem Übertragungszusammenhang berücksichtigt, dass an dem wenigstens einen Immissionspunkt die resultierende Schallimmission einen vorgegebenen Immissionsgrenzwert nicht überschreitet. Dafür ist es nicht unbedingt erforderlich, dass die Schallimmission an dem Immissionspunkt tatsächlich auch bestimmt wird. Es kann ausreichen, dass in Abhängigkeit von einem Immissionsgrenzwert an einem Immissionspunkt über den Übertragungszusammenhang bestimmt wird, welche Betriebszustände maximal vorliegen dürfen. Solche Zusammenhänge können durch Vorsimulationen bestimmt und in Tabellen hinterlegt sein. Solche Zusammenhänge können aber auch analytisch als Funktionen hinterlegt sein.

Es kommt natürlich auch in Betracht, dass aus den Betriebszuständen eine Schallabgabe an der Windenergieanlage bestimmt wird und davon ausgehend und abhängig von dem Übertragungszusammenhang eine Immission an dem Immissionspunkt ermittelt wird. Auch dies ist als Ergebnis einer Simulation zu verstehen, die diesen Zusammenhang simuliert. Wird dann erkannt, dass die Immission am Immissionspunkt zu hoch ist, kann der Betriebszustand angepasst werden. Dazu kann beispielsweise eine Iterationsschleife vorgesehen sein, die die Betriebszustände etwas anpasst, also insbesondere Drehzahl und Leistung etwas reduziert, wobei dann wieder eine Schallabgabe, also insbesondere ein Schalldruckpegel an der Windenergieanlage bestimmt wird und davon ausgehend über den Übertragungszusammenhang die Immission am Immissionspunkt bestimmt wird. Ist sie ausreichend abgefallen, nämlich auf oder unter den Immissionsgrenzwert, kann die Iteration beendet werden, ansonsten könnte ein weiterer Iterationsschritt durchgeführt werden.

Unabhängig davon, wie diese Berücksichtigung der Immission am Immissionspunkt durchgeführt wird, stellen sich jedenfalls entsprechende Betriebszustände ein und für die wird jeweils die Leistungserzeugung der Windenergieanlage bestimmt und über die Zeit aufintegriert, um schließlich die immissionsabhängige Ertragsprognose zu erhalten.

Vorzugsweise wird vorgeschlagen, dass in der Simulation ausgehend von einem Immissionsgrenzwert an dem wenigstens einen Immissionspunkt jeweils in Abhängigkeit von dem Übertragungszusammenhang wenigstens ein maximal zulässiger Betriebszustand bestimmt wird, insbesondere eine maximal zulässige Drehzahl. Dazu wird vorgeschlagen, unter Verwendung dieses wenigstens einen maximal zulässigen Betriebszustands die immissionsabhängige Ertragsprognose zu erstellen. Insbesondere wird vorgeschlagen, dass das so erfolgt, dass in Abhängigkeit von dem wenigstens einen maximal zulässigen Betriebszustand, insbesondere also in Abhängigkeit von der maximal zulässigen Drehzahl, eine Betriebskennlinie ausgewählt wird.

Dadurch kann, wie oben schon erläutert wurde, auf einfache Art und Weise eine genaue Einhaltung des Immissionsgrenzwertes am Immissionspunkt erreicht werden. Diese genaue Einhaltung bedeutet nämlich, dass in der Simulation zum Erstellen der Ertragsprognose der Betrieb der Windenergieanlage genauso eingestellt wird wie dies auch später in dem noch zu erstellenden Windpark zu erwarten wäre. Dadurch wird genau die Leistung ermittelt, die auch unter Berücksichtigung des Immissionsgrenzwertes am Immissionspunkt zu erwarten ist.

Besonders vorteilhaft ist, als maximal zulässigen Betriebszustand eine maximal zulässige Drehzahl zu bestimmen. Dies ist durch einen einfachen vorherbestimmbaren Zusammenhang zwischen Immissionsgrenzwert und Übertragungszusammenhang, also unter Berücksichtigung des Zustands der Erdatmosphäre, also des Wetters, besonders der Ausbreitungs-Wetterparameter, möglich. Mit anderen Worten kann dadurch situationsabhängig jedem Immissionsgrenzwert eine maximale Drehzahl zugeordnet werden. In Abhängigkeit von dieser Drehzahl kann dann die Einstellkennlinie gewählt werden, die wiederum einen weiteren Betriebszustand, nämlich Abgabeleistung bzw. das Drehmoment einstellt.

Ein Einfluss von Drehzahl und Drehmoment bzw. Drehzahl und Leistung auf die Schallimmission am Immissionspunkt kann hierbei mit berücksichtigt werden. Mit anderen Worten kann also der Zusammenhang zwischen Immissionsgrenzwert am Immissionspunkt und maximaler Drehzahl berücksichtigen, dass dieser maximalen Drehzahl aufgrund der zu wählenden Einstellkennlinie eine bestimmte Abgabeleistung zugeordnet ist. Das kann im Übrigen auch weitere notwendige Einstellungen der Windenergieanlage berücksichtigen, insbesondere einen zu wählenden Blattwinkel.

Für die Ertragsprognose wird somit über den Prognosezeitraum, insbesondere ein Jahr, das Verhalten des Windparks durchsimuliert. Dabei wird möglichst gut das Verhalten des geplanten Windparks, insbesondere das Verhalten der jeweils betrachteten Windenergieanlage, nachgebildet. Dieses Nachbilden in der Simulation kann besonders bedeuten, dass die jeweiligen Zusammenhänge in dem Prognosemodell als Verhalten der Windenergieanlage bzw. des jeweiligen Windparks enthalten sind. Das Modell kann also all diese Verhaltensweisen beinhalten. Die Simulation ist besonders dazu vorgesehen, dieses Prognosemodell nach und nach anzuwenden, also basierend auf dem Prognosemodell über den Prognosezeitraum das Verhalten durchzusimulieren. Betriebszustände werden dabei nach und nach erstellt, was im zeitlichen Sinne zu verstehen ist. Es werden also beispielsweise für jede Minute oder alle Viertelstunde, um zwei anschauliche Beispiele zu nehmen, Betriebszustände der Windenergieanlage bzw. des Windparks erstellt. Jedes Mal liegt das Prognosemodell zugrunde, aber natürlich auch Betriebszustände; besonders können vorherige Betriebszustände, die also in einem zeitlich davorliegenden Simulationsschritt erstellt wurden, berücksichtigt werden.

Konkret kann die Simulation für den Prognosezeitraum so durchgeführt werden, dass alle Situationen simuliert werden, die auftreten können, wobei jede Situation nur einmal simuliert wird. Besonders können dafür die verschiedenen Betriebszustände der Windenergieanlage für alle auftretenden Kombinationen von Randbedingungen durchsimuliert werden. Hierzu kann besonders für jede auftretende Kombination von Betriebs-Wetterparametern und Ausbreitungs-Wetterparametern eine Simulation durchgeführt werden. Die Betriebs-Wetterparameter und die Ausbreitungs-Wetterparameter können dabei stufenweise verändert werden, damit sich nicht unendlich viele Kombinationen ergeben. Zu jeder Kombination, die somit jeweils eine Situation widerspiegelt, wird ein Ertrag ermittelt und abhängig von der Wetterprognose, also auch von der Prognose der Betriebs-Wetterparameter und Ausbreitungs-Wetterparameter ergibt sich, wie häufig bzw. für welchen Zeitraum insgesamt die jeweilige Situation auftritt. Damit ergibt sich, für welchen Zeitraum der jeweilige Ertrag bestimmt wird. Es wird dann jeder Ertrag über seinen Zeitraum aufintegriert und all diese Integrale zusammen ergeben den vorhergesagten Ertrag, also besonders den Jahresertrag.

Gemäß einer Ausführungsform wird vorgeschlagen, dass in der Simulation wenigstens ein Betriebszustand einer ersten Windenergieanlage in Abhängigkeit von der Wetterprognose, insbesondere der Betriebs-Wetterparameter, von dem wenigstens einen Übertragungszusammenhang der ersten Windenergieanlage und in Abhängigkeit von wenigstens einem Übertragungszusammenhang wenigstens einer weiteren Windenergieanlage bestimmt wird.

Hier liegt besonders die Erkenntnis zugrunde, dass die Immission an einem Immissionspunkt die Überlagerung von Schall sein kann, der seinen Ursprung an mehreren Windenergieanlagen hat. Dadurch kann die Schallimmission an dem Immissionspunkt höher sein als wenn nur eine einzelne Windenergieanlage die Ursache wäre. Die Schallimmission an dem Immissionspunkt hängt somit von dem Schall ab, der von mehreren Windenergieanlagen ausgeht. Damit hängt die Schallimmission auch von den jeweiligen Übertragungszusammenhängen ab, also dem Übertragungszusammenhang für den Schall von der ersten, also der betrachteten Windenergieanlage zum Immissionspunkt und von dem Übertragungszusammenhang einer weiteren Windenergieanlage zu demselben Immissionspunkt. In diesem Sinne können natürlich auch noch weitere Windenergieanlagen betrachtet werden.

Um nun eine Immissionsgrenze einzuhalten, kann es erforderlich sein, den Einfluss dieser wenigstens einen weiteren Windenergieanlage mit zu berücksichtigen. Das Ergebnis kann sein, dass die betrachtete Windenergieanlage stärker abregeln müsste als wenn sie nur alleine für die Schallimmission an dem Immissionspunkt verantwortlich wäre. Gleiches gilt dann natürlich auch für die weitere Windenergieanlage.

Daher wird vorgeschlagen, diesen wenigstens einen weiteren Übertragungszusammenhang der wenigstens einen weiteren Windenergieanlage bei der Bestimmung des wenigstens einen Betriebszustands in der Simulation mit zu berücksichtigen. Hier liegt auch der Gedanke zugrunde, dass die Wetterprognose, die für den Windpark erstellt wird, für alle betrachteten Windenergieanlagen gleichermaßen gilt. Somit liegt eine Wetterprognose für die betrachtete Windenergieanlage vor, aus der ihr nicht abgeregelter Betrieb abgeleitet werden kann, und es liegt eine Wetterprognose, nämlich dieselbe, für die wenigstens eine weitere Windenergieanlage vor, sodass für diese wenigstens eine weitere Windenergieanlage somit auch ihr Betriebsverhalten ermittelt werden kann, das sie ohne Abregelung hätte. Es kann damit auch aus der Wetterprognose, und natürlich Kenntnis der jeweiligen Windenergieanlage, der abgegebene Schall an der Windenergieanlage bestimmt werden und über den Übertragungszusammenhang der Einfluss auf die Immission am Immissionspunkt. Mit anderen Worten ist für die Berücksichtigung des Einflusses der weiteren Windenergieanlage als zusätzliche Information lediglich ihr Übertragungszusammenhang zu berücksichtigen. Genau das wird hier vorgeschlagen.

Es ist zu bemerken, dass allerdings nicht unbedingt ausdrücklich die Schallabgabe der betrachteten Windenergieanlage und auch der wenigstens einen weiteren Windenergieanlage ermittelt werden muss und daraus über die Übertragungszusammenhänge die aus der Überlagerung entstehende Schallimmission am Immissionspunkt ermittelt werden muss, sondern es kann ausreichend sein zu betrachten, welchen Einfluss die wenigstens eine weitere Windenergieanlage auf den Betriebszustand der betrachteten Windenergieanlage hat. Beispielsweise kann aus Erfahrungswerten, die auch in einer Simulation gewonnen werden können, abgeleitet werden, wie viel mehr die betrachtete Windenergieanlage aufgrund der wenigstens einen weiteren Windenergieanlage abgeregelt werden muss. Dabei wurde aber erkannt, dass dieser Zusammenhang nicht statisch ist, also auch nicht eindeutig Betriebs-Wetterparametern zugeordnet werden kann, sondern dass auch dies von dem Übertragungszusammenhang der wenigstens einen weiteren Windenergieanlage abhängen kann. Bei gleichen Betriebs-Wetterparametern kann also das Ergebnis unterschiedlich sein. Über die Berücksichtigung auch des Übertragungszusammenhangs der wenigstens einen weiteren Windenergieanlage kann das berücksichtigt werden.

Damit kann insgesamt die tatsächliche Immission bzw. die zur Vermeidung des Überschreitens von Immissionsgrenzen notwendige Betriebsdrosselung präziser berücksichtigt werden. Anderenfalls müsste nämlich, wenn diese Übertragungszusammenhänge nicht berücksichtigt werden, von dem ungünstigsten Fall ausgegangen werden, wenn also die Übertragungszusammenhänge besonders eine sehr hohe Schallübertragung bedingen, also eine besonders hohe Schallimmission am Immissionspunkt auftreten würde, wenn nicht reduziert wird, und entsprechend müsste die betrachtete Windenergieanlage, und im Übrigen auch die weiteren Windenergieanlagen, entsprechend stark abgeregelt werden. Sie würden also auch dann stark abgeregelt werden, wenn aufgrund des Übertragungszusammenhangs aber eine so starke Abregelung nicht notwendig wäre. Das Ergebnis wäre, dass die Ertragsprognose zu gering ausfällt.

Alternativ kann, statt der Betrachtung wenigstens eines Übertragungszusammenhangs der wenigstens einen weiteren Windenergieanlage, ein Betriebszustand der wenigstens einen weiteren Windenergieanlage berücksichtigt werden. In diesen fließt der Übertragungszusammenhang ggf. mit ein.

Vorzugsweise kann der Übertragungszusammenhang und auch der Betriebszustand der wenigstens einen weiteren Windenergieanlage, oder mehrere Betriebszustände, zusammen betrachtet werden. Der Betriebszustand der wenigstens einen weiteren Windenergieanlage kann Aufschluss über die Schallabgabe geben und der Übertragungszusammenhang kann Aufschluss darüber geben, wie sich die Schallabgabe auf den Immissionspunkt auswirkt. Dabei kann dann die Wirkung der Wetterprognose, besonders der Betriebs-Wetterparameter, auf diese wenigstens eine weitere Windenergieanlage über die Betrachtung des Betriebszustands der wenigstens einen weiteren Windenergieanlage berücksichtigt werden.

Auch der wenigstens eine Betriebszustand der wenigstens einen weiteren Windenergieanlage kann in der Simulation dadurch ermittelt werden, dass die betreffende Windenergieanlage im Hinblick auf die Wetterprognose, besonders die Betriebs-Wetterparameter, simuliert wird und wie beschrieben auch im Hinblick auf ihren Übertragungszusammenhang simuliert wird.

Somit wird hier ein Aspekt vorgeschlagen, der die Einwirkung weiterer Windenergieanlagen auf den Betrieb der betrachteten Windenergieanlage berücksichtigt.

Zum Erstellen der Ertragsprognose für den gesamten Windpark kann in dieser Art und Weise für jede Windenergieanlage im Park vorgegangen werden.

Es wird somit vorgeschlagen, dass der wenigstens eine Betriebszustand der ersten Windenergieanlage, die also die betrachtete Windenergieanlage bildet, und derwenigstens eine Betriebszustand der wenigstens einen weiteren Windenergieanlage iterativ voneinander abhängig bestimmt werden. Hier liegt besonders die Erkenntnis zugrunde, dass über die Berücksichtigung der Schallimmission die Betriebseinstellungen der betroffenen Windenergieanlagen sich gegenseitig beeinflussen. Eine Reduzierung jeder betroffenen Windenergieanlage zur Begrenzung der Schallimmission könnte dazu führen, dass zu stark reduziert wird und wieder leicht erhöht werden könnte. Das kann dann in einem Iterationsschritt umgesetzt werden. Vorzugsweise wird auch die Orographie mit berücksichtigt.

Gemäß einer Ausführungsform wird vorgeschlagen, dass der wenigstens eine Betriebszustand der ersten Windenergieanlage in Abhängigkeit von wenigstens einem Wert der Wetterprognose, besonders wenigstens einem der Betriebs-Wetterparameter, und wenigstens einem Wert der Ausbreitungs-Wetterparameter bestimmt wird und in Abhängigkeit von diesen Werten in einer Tabelle hinterlegt ist und in der Simulation ausgelesen wird. Hier liegt die Überlegung zugrunde, dass im Wesentlichen der wenigstens eine Betriebs-Wetterparameter und der wenigstens eine Ausbreitungs-Wetterparameter die jeweils zu simulierende Situation widerspiegelt. Treten insoweit gleiche Konstellationen erneut auf, ist auch mit denselben Ergebnissen zu rechnen.

Dies wurde besonders auch für das Zusammenspiel der Windenergieanlagen untereinander erkannt. Dieses Zusammenspiel zu simulieren kann sehr aufwendig sein und beispielsweise durch iterative Verfahren gelöst werden, wie oben erläutert wurde. Vorzugsweise werden solche iterativen Verfahren aber nur einmal für die gleiche oder ähnliche Situation verwendet, und das Ergebnis kann dann wiederverwendet werden. Das wird dadurch realisiert, dass dieses Ergebnis, also besonders der eine oder die mehreren Betriebszustände, zu der betreffenden Situation in einer Tabelle abgespeichert sind. Diese hinterlegten Werte sind dabei auch im Lichte der Übertragungszusammenhänge entstanden, berücksichtigen diese Übertragungszusammenhänge also. Diese hinterlegten Werte berücksichtigen also sowohl den Übertragungszusammenhang von der einen betrachteten, also der ersten Windenergieanlage zum Immissionspunkt als auch wenigstens einen weiteren solchen Übertragungszusammenhang von einer weiteren Windenergieanlage zum Immissionspunkt.

Besonders wird vorgeschlagen, dass als Betriebszustand der ersten Windenergieanlage ihre Drehzahl und/oder ihre Leistung vorbestimmt und abgespeichert werden. Besonders kommt in Betracht, die Drehzahl und die Leistung abzuspeichern, gegebenenfalls kann aber auch die Leistung aus der Drehzahl ermittelt werden.

In jedem Fall kann vorgesehen sein, dass Windgeschwindigkeit und Windrichtung jeweils einen Wert der Betriebs-Wetterparameter bilden. Außerdem kann ein Übertragungszusammenhang zwischen der Schallabgabe an einer Windenergieanlage und der Schallimmission am Immissionspunkt als Verstärkungsfaktor berücksichtigt werden, der insbesondere im Bereich zwischen 0 und 1 liegt. Bei dem Verstärkungsfaktor mit dem Wert 0 erfolgt also keine Schallübertragung und bei dem Verstärkungsfaktor mit dem Wert 1 ist die Schallimmission am Immissionspunkt genauso groß wie der Schallleistungspegel an der Windenergieanlage, von der dieser Schall ausgeht. Der Verstärkungsfaktor kann auch als prozentualer Wert von 0 % bis 100 % angegeben werden. Zum Abspeichern in der Tabelle kann es vorteilhaft sein, diskrete Schritte zu verwenden, also beispielsweise 5 %-Schritte für den Verstärkungsfaktor des Übertragungszusammenhangs. Aber auch für die Werte der Wetterprognose, besonders der Betriebs-Wetterparameter, können diskrete Schritte zum Abspeichern in der Tabelle verwendet werden, beispielsweise Schritte von 1 m/s für die Windgeschwindigkeit und Schritte von 5° für die Windrichtung.

In diesem Beispiel wird somit, was auch eine besondere Ausführungsform ist, ein dreidimensionales Feld als Tabelle hinterlegt, in dem in Abhängigkeit von der Windgeschwindigkeit, der Windrichtung und dem Verstärkungsfaktor ein Wert des Betriebszustands bzw. jeweils ein Wert für jeden der vorbestimmten Betriebszustände abgespeichert wird. Beim Auslesen wird dann also geprüft, auch hier in der Simulation, welche Windgeschwindigkeit, welche Windrichtung und welcher Verstärkungsfaktor vorliegen. Es kann dann zum Nachschlagen in der Tabelle jeweils der dem tatsächlich erfassten Wert für Windgeschwindigkeit, Windrichtung bzw. Verstärkungsfaktor nächstgelegene Wert verwendet werden. Es kommt auch in Betracht, zu dem genauen Wert zu extrapolieren oder zu interpolieren. Beim Interpolieren kann jeweils ein Wert für die nächstniedrigeren Eingangswerte ausgelesen werden, und auch ein Wert für den jeweils nächstgrößeren Eingangswert, und zwischen diesen beiden Werten entsprechend interpoliert werden.

Das erläuterte Beispiel ist auf jegliche Werte der Betriebs-Wetterparameter und jegliche Werte der Ausbreitungs-Wetterparameter anwendbar, wenn also beispielsweise zwei Werte der Betriebs-Wetterparameter und zwei Werte der Ausbreitungs-Wetterparameterberücksichtigt werden, ergibt sich entsprechend ein vierdimensionales Feld, in dem die vorbestimmten Werte abgelegt werden und auch wieder ausgelesen werden können. Die abzulegenden Betriebszustände können, wenn nicht nur ein Betriebszustand betrachtet wird, als Paare oder Tupel abgelegt werden.

Gemäß einer Ausführungsform wird vorgeschlagen, dass bereits die Gesamtleistung des Windparks vorbestimmt wird, und in Abhängigkeit von den gewählten Werten, also dem einen Wert oder den mehreren Werten der Betriebs-Wetterparameter und dem einen Wert oder den mehreren Werten der Ausbreitungs-Wetterparameter, in der Tabelle hinterlegt werden.

Dadurch können die jeweils zugrundeliegenden Situationen aufwendig simuliert werden und in der Tabelle abgelegt werden. Zur Bestimmung der Ertragsprognose brauchen dann diese Werte, sofern sie schon vorbestimmt wurden, nur ausgelesen und angewendet zu werden, nämlich zu der Gesamtertragsprognose über den jeweils relevanten Zeitraum aufintegriert zu werden.

Vorzugsweise wird ein kombiniertes adaptives Verfahren vorgeschlagen, bei dem in Abhängigkeit von jeweils aktuellen Werten der Betriebs-Wetterparameter und jeweils aktuellen Ausbreitungs-Wetterparametern, das Verhalten der Windenergieanlagen und damit im Ergebnis die Leistungsproduktion des Windparks durch Simulation erfasst werden. Gleichzeitig werden sie in einem der beschriebenen Vorschläge in einer Tabelle abgespeichert. Ändern sich nun die Werte der Betriebs-Wetterparameter und/oder die Werte der Ausbreitungs-Wetterparameter, so wird erneut simuliert, aber zuvor geprüft, ob diese neue Konstellation bereits einmal aufgetreten war. Ist das der Fall, wird die Simulation abgebrochen und stattdessen der entsprechende Wert aus der Tabelle ausgelesen.

Gemäß einer Ausgestaltung wird vorgeschlagen, dass wenigstens eine Koordinierungsvorschrift zum Koordinieren der Windenergieanlagen untereinander innerhalb des Windparks vorbestimmt ist. Eine solche Koordinierungsvorschrift ist insbesondere so ausgebildet, dass sie einen Zusammenhang zwischen Betriebseinstellungen mehrerer Windenergieanlagen untereinander festlegt. Hier kommt besonders in Betracht, dass zur Einhaltung einer Schallimmissionsgrenze an einem Immissionspunkt mehrere Windenergieanlagen abgeregelt werden könnten. Meist wird dann die Abregelung jeder der für die Schallimmission relevanten Windenergieanlagen auch zu einer Reduzierung der Schallimmission führen. Dazu wird vorgeschlagen, dass die Koordinierungsvorschrift festlegt, wie hierbei die Aufteilung zwischen den Windenergieanlagen erfolgt.

In einer einfachen Ausführungsform kann das so erfolgen, dass alle beteiligten Windenergieanlagen gleichmäßig abgeregelt werden, also insbesondere um denselben prozentualen Wert ihrer Drehzahl reduziert werden. Es kommt auch in Betracht, sie um den gleichen prozentualen Wert ihrer Abgabeleistung zu reduzieren.

Ebenfalls kommt in Betracht zu erfassen, wie stark jede der Windenergieanlagen an der jeweiligen Schallimmission an dem Immissionspunkt beteiligt ist. Vorzugsweise kann dann die Koordinierungsvorschrift vorsehen, dass die Windenergieanlagen in dem Maße reduziert werden wie sie an der Schallimmission beteiligt sind. Diese Variante hat besonders den Vorteil, dass vermieden wird, dass Windenergieanlagen, die nur einen geringen Anteil an einer Schallimmission an dem Immissionspunkt haben, unnötig stark abgeregelt werden. Durch Berücksichtigung des Verhältnisses kann eine allgemeine Vorschrift gefunden werden, die für jeden Immissionspunkt als Abregelungsanteil jeder Windenergieanlage zugeordnet werden kann.

Vorzugsweise berücksichtigt die Koordinierungsvorschrift die Windrichtung und/oder jeweils einen Abstand zwischen jeder relevanten Windenergieanlage und dem Immissionspunkt. Wird die Windrichtung und dieser Abstand zugleich betrachtet, so können beide Werte beispielsweise durch eine Gewichtung zu einem gemeinsamen Faktor führen, der die Abregelungsaufteilung festlegt. Davon abhängig kann der Abregelungsanteil festgelegt werden.

Befindet sich der Immissionspunkt beispielsweise in Lee einer Windenergieanlage, ist davon auszugehen, dass der von dieser Windenergieanlage abgegebene Schall auch zu dem Immissionspunkt getragen wird und einen entsprechend großen Einfluss hat. Gleichzeitig wird dieser Einfluss aber geringer sein, wenn die Windenergieanlage von dem Immissionspunkt weiter entfernt steht.

Es wird somit generell vorgeschlagen, dass für jede relevante Windenergieanlage der Übertragungszusammenhang berücksichtigt wird, um die Koordinierungsvorschrift zu erstellen. Mit anderen Worten ist die Koordinierungsvorschrift abhängig von den Übertragungszusammenhängen der Windenergieanlagen, für die diese Koordinierungsvorschrift bestimmt werden soll.

Insbesondere ist vorgesehen, dass für jeden Immissionspunkt eine einzelne Koordinierungsvorschrift vorbestimmt und verwendet wird.

Es ist nun vorgesehen, dass zum Erstellen der immissionsabhängigen Ertragsprognose die wenigstens eine Koordinierungsvorschrift berücksichtigt wird. Insbesondere wird diese Koordinierungsvorschrift in dem Prognosemodell berücksichtigt und/oder bei einer Simulation berücksichtigt, die jeweils für Zeitabschnitte den geplanten Windpark durchsimuliert, um die Ertragsprognose zu erstellen.

Hier wurde besonders erkannt, dass nicht allein die physikalischen Bedingungen, also insbesondere die Betriebs-Wetterparameter, besonders Windrichtung und Windgeschwindigkeit, und Ausbreitungs-Wetterparameter den Ertrag beeinflussen, sondern dass es auch darauf ankommt, wie die Windenergieanlagen in dem Windpark betrieben werden. Dabei wurde erkannt, dass deren Zusammenspiel, insbesondere, wenn sie nach vorgegebenen Vorschriften voneinander abgeregelt werden, auch bei der Erstellung der Ertragsprognose zu berücksichtigen sein sollten.

Gemäß einer Ausführungsform wird vorgeschlagen, dass in der Simulation für mehrere der Windenergieanlagen des Windparks jeweils eine Einzelimmissionsprognose erstellt wird. Eine solche Einzelimmissionsprognose kann besonders die erläuterten Zusammenhänge mit berücksichtigen, nämlich besonders auch den Übertragungszusammenhang, der nämlich von den Ausbreitungs-Wetterparametern abhängt. Abhängig von der so erstellen Einzelimmissionsprognose kann dann auch erkannt werden, wie die Windenergieanlage gegebenenfalls abgeregelt werden muss. Entsprechend kann bei der Ertragsprognose diese dezidierte Abregelung berücksichtigt werden.

Optional ist vorgesehen, dass aus den Einzelimmissionsprognosen eine Gesamtimmissionsprognose für den Windpark als die Immissionsprognose erstellt wird, insbesondere durch Überlagerung der Einzelprognosen. Hier wird somit vorgeschlagen, bereits über die Betrachtung der Schallimmission zumindest teilweise eine Gesamtparkbetrachtung vorzunehmen. Zumindest insoweit Windenergieanlagen für den betrachteten Immissionspunkt relevant sind, können diese durch diese Betrachtung der überlagerten Schallimmission zusammen berücksichtigt werden. Entsprechend würden auch diese Windenergieanlagen abgeregelt werden müssen, wenn die Gesamtschallimmissionsprognose über einem Schallimmissionsgrenzwert liegt.

Die resultierende Abregelung kann dann zur Erstellung der Ertragsprognose berücksichtigt werden.

Entsprechend wird dann vorgeschlagen, dass die immissionsabhängige Ertragsprognose in Abhängigkeit von der Einzelprognose und gegebenenfalls der Gesamtimmissionsprognose erstellt wird.

Hier kommt aber auch in Betracht, dass die immissionsabhängige Ertragsprognose die Einzelimmissionsprognose und/oder die Gesamtimmissionsprognose nur indirekt berücksichtigt, beispielsweise über einen resultierenden Abregelungsfaktor für die Abgabeleistung der Windenergieanlage bzw. der Windenergieanlagen bei der entsprechenden Immissionssituation.

Vorzugsweise wird vorgeschlagen, dass das Erstellen der immissionsabhängigen Ertragsprognose, insbesondere das Prognosemodell, ein Steuerverhalten der Windenergieanlage berücksichtigt, das in Abhängigkeit von dem Übertragungszusammenhang arbeitet.

Hier wurde besonders erkannt, dass die Windenergieanlage entsprechend zu erwartender Immissionen oder entsprechend auftretender Immissionen gesteuert wird und dazu ein Steuerverhalten vorliegt. Bei dem zu projektierenden Windpark wird hierbei auch ein Übertragungszusammenhang zugrunde gelegt, der einen Zusammenhang zwischen dem von der Windenergieanlage ausgehenden Schallsignal und der am Immissionspunkt resultierenden Schallimmission beschreibt. Dieser Übertragungszusammenhang hängt auch von Ausbreitungs-Wetterparametern ab und genau das wird somit bei dem Steuerverhalten der Windenergieanlage berücksichtigt.

Bei sonst gleichen Umweltbedingungen kommt somit in Betracht, dass die Windenergieanlage je nach Übertragungszusammenhang unterschiedlich reagiert, insbesondere unterschiedlich abregelt, insbesondere mal mehr, mal weniger stark abregelt oder in einem Fall gar nicht abregelt. Genau dies wird in dem Steuerverhalten berücksichtigt und es wird vorgeschlagen, dass das Erstellen der immissionsabhängigen Ertragsprognose dieses Steuerverhalten ebenfalls berücksichtigt.

Erfindungsgemäß wird auch ein Verfahren zum Projektieren eines mehrere Windenergieanlagen aufweisenden Windparks vorgeschlagen. Das Verfahren ermittelt in einem Ertragsschritt einen Ertrag des Windparks gemäß einer ersten Windparkkonfiguration. Dazu wird ein Verfahren zum Ermitteln einer Ertragsprognose gemäß wenigstens einer der vorstehend beschriebenen Ausführungsformen verwendet. Der Ertrag wird dabei, wie das auch in besagten Ausführungsformen der Fall ist, für den Prognosezeitraum ermittelt.

Dann ist ein Wiederholungsschritt vorgesehen, in dem einmalig oder mehrfach der Ertragsschritt wiederholt wird, wobei jeweils die Windparkkonfiguration geändert wird. Der Ertrag wird dann also für einen Windpark mit geänderter Windparkkonfiguration erstellt. Eine geänderte Windparkkonfiguration kann besonders so ausgestaltet sein, dass Parameter des Windparks geändert wurden. Insbesondere das Ändern von Steuerparametern kann dabei vorgesehen sein. Eine Windparkkonfiguration kann aber auch die konkreten Komponenten in Windenergieanlagen betreffen und sie kann auch konkret ausgewählte Windenergieanlagen betreffen, so dass also zu unterschiedlichen Windparkkonfigurationen unterschiedliche Windenergieanlagen gehören.

In einem Bewertungsschritt wird dann eine Bewertung jeder Windparkkonfiguration in Abhängigkeit von dem jeweils ermittelten Ertrag erstellt. Eine solche Bewertung kann beispielsweise bedeuten, dass der Ertrag des Windparks in Relation zu Kosten des Windparks gestellt wird. Der Ertrag des Windparks ist insbesondere eine jährliche Energieproduktion des Windparks. Kosten des Windparks betreffen besonders die Bewertung verschiedener Aufwendungen für den Windpark. Eine solche Aufwendung kann auch das Anfallen von Verschleiß sein, bzw. die Aufwendungen, die notwendig sind, diesen Verschleiß auszugleichen oder zu vermeiden. Aber auch Kosten für die Wahl und Installation von Komponenten können solche Kosten bilden oder ein Teil davon sein. Auch die sich insgesamt ergebende Laufzeit einer Windenergieanlage und/oder des Windparks insgesamt, können Kosten sein.

In einem Auswahlschritt wird dann in Abhängigkeit von der Bewertung der unterschiedlichen Windparkkonfigurationen, für die jeweils ein Ertrag erstellt wurde, die beste Windparkkonfiguration ausgewählt.

Für diese ausgewählte Windparkkonfiguration wird dann in einem Zertifizierungsschritt ein Parkzertifikat für den Windpark gemäß der ausgewählten Windparkkonfiguration erstellt. Solche Zertifikate können eine wichtige Grundlage sein, um einen Windpark sinnvoll aufzustellen, insbesondere können sie vorgeschrieben sein.

Hier wurde besonders erkannt, dass für das Erstellen eines solchen vorgeschriebenen Zertifikats eine verbesserte Lösung zum Ermitteln des Ertrags des Windparks vorgeschlagen wird. Damit ist ein verlässlicheres und/oder genaueres Zertifikat erstellbar.

Es kommt aber auch in Betracht, dass eine Windparkkonfiguration in Abhängigkeit von der Bewertung ausgewählt wird, ohne dass ein Zertifikat erstellt wird.

Wird ein Zertifikat erstellt, so kommt auch in Betracht, dass der Wiederholungsschritt ausgelassen wird, dass das Zertifikat also für genau den Windpark gemäß der ersten Windparkkonfiguration erstellt wird. Das kommt besonders dann in Betracht, wenn nach dem Ertragsschritt bereits erkannt wurde, dass ein vorteilhafter Ertrag ermittelt wurde. Es kommt auch in Betracht, dass ein Windpark geplant ist, für den nur eine sinnvolle Windparkkonfiguration erkennbar ist. Für diese Windparkkonfiguration kann der Ertrag ermittelt werden und dafür kann dann ein Zertifikat erstellt werden. Eine Variation kann dann entfallen.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: veranschaulicht in einer schematischen Darstellung eine mögliche Schallpegelsituation eines Windparks.
- Figur 4: veranschaulicht in einem Diagramm die Berücksichtigung einer Schallimmis-sion schematisch.
- Figur 5: zeigt eine Schallausbreitungsillustration, besonders zum Erläutern eines Übertragungszusammenhangs für Schall.
- Figur 6: zeigt ein Ablaufschema zum Erläutern eines Verfahrens zum Projektieren eines Windparks.

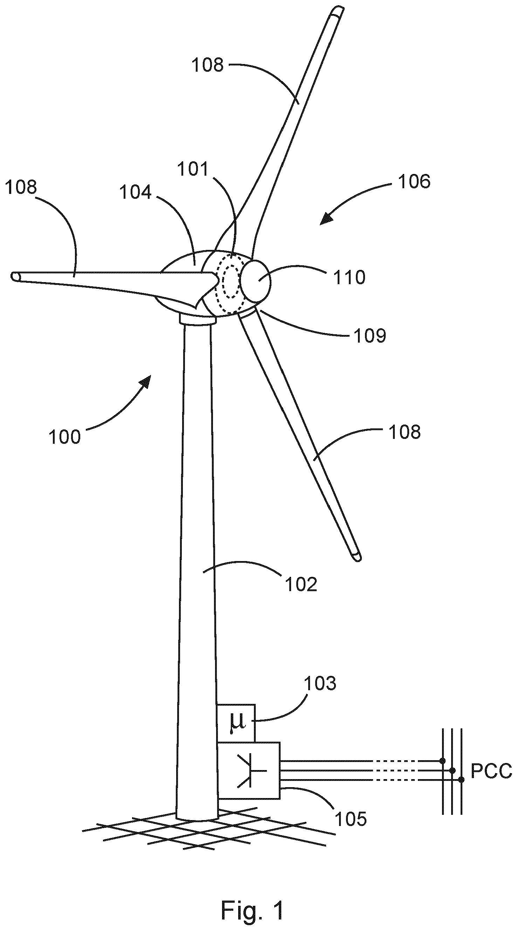

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

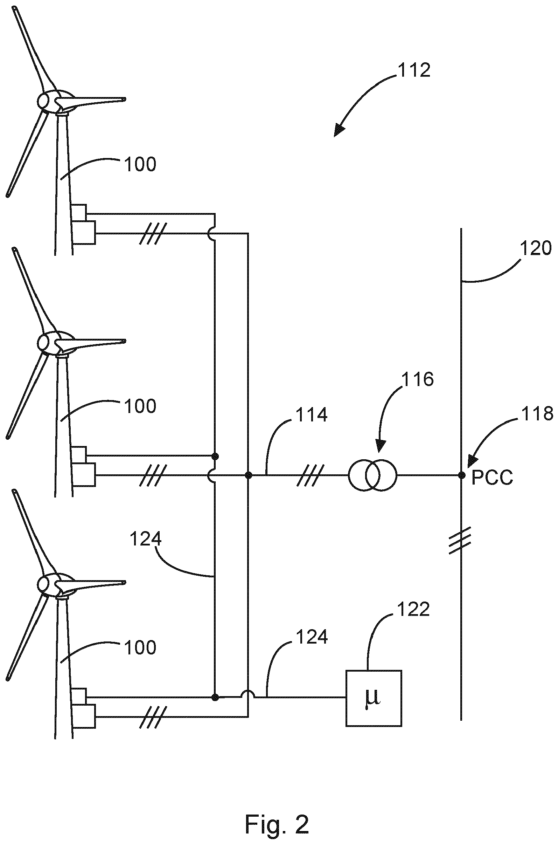

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

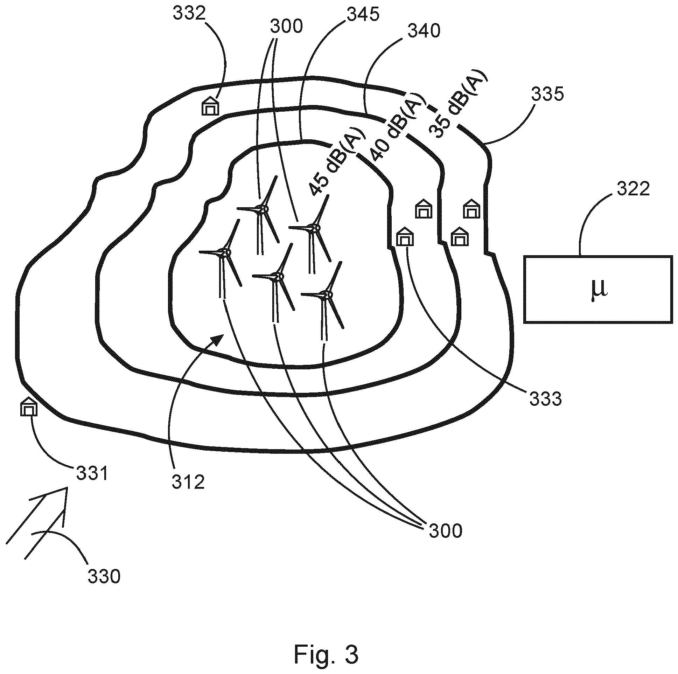

Figur 3 veranschaulicht einen Windpark 312 mit exemplarisch fünf Windenergieanlagen 300, die jeweils einer Windenergieanlage 100 gemäß Figur 1 entsprechen können. Ebenso kann der Windpark 312 einem Windpark 112 gemäß Figur 2 entsprechen.

Der Windpark erzeugt Schall und dieser kann als Schalldruckpegel veranschaulicht werden. In Figur 3 sind drei Schalldruckpegel 335, 340 und 345 exemplarisch eingezeichnet, nämlich jeweils durch eine umlaufende Linie, die entsprechend für einen Schalldruckpegel gleicher Größe steht. Die Schalldruckpegellinie 335 steht für einen Schalldruck von 35 dB(A), während die Schalldruckpegellinie 340 für einen Schalldruckpegel von 40 dB(A) steht und die Schalldruckpegellinie 345 für einen Schalldruckpegel von 45 dB(A).

In der Figur 3 ist bereits angedeutet, dass sich somit der Schall nicht unbedingt gleichmäßig um den Windpark 312 herum ausbreitet. Es könnte beispielsweise so sein, dass die schematisch eingezeichnete Windrichtung 330 aus Südost kommt, wenn Figur 3 nach Norden ausgerichtet ist.

Diese Schalldruckpegel sind dann besonders an Immissionspunkten 331 bis 333 relevant. Diese Immissionspunkte 331 bis 333 sind als Häuser symbolisiert und sollen damit andeuten, dass besonders bei einer Besiedlung die Schallimmission relevant ist. In der Nähe des dritten Schallimmissionspunktes 333 sind noch weitere Häuser symbolisiert, die ebenfalls Immissionspunkte bilden können. Der Einfachheit halber wird hier davon ausgegangen, dass der Schallimmissionspunkt 333 allerdings für diese vier Häuser der relevanteste ist.

Es ist nun für den Betrieb des Windparks wichtig, für diese Immissionspunkte, die auch als Schallimmissionspunkte synonym bezeichnet werden können, sicherzustellen, dass Immissionsgrenzen eingehalten werden. Beträgt die Immissionsgrenze am dritten Immissionspunkt 333 45 dB(A), so würde in der gezeigten Situation dieser Wert gerade eingehalten werden.

Das kann aber daran liegen, dass der Windpark bereits abgeregelt ist. Das kann beispielsweise durch einen Windparkrechner 322 erfolgen, der in Figur 3 schematisch dargestellt ist und auch als zentrale Parksteuerung bezeichnet werden kann. Dieser Parkrechner bzw. diese zentrale Parksteuerung 322 kann dem Parkrechner 122 der Figur 2 entsprechen.

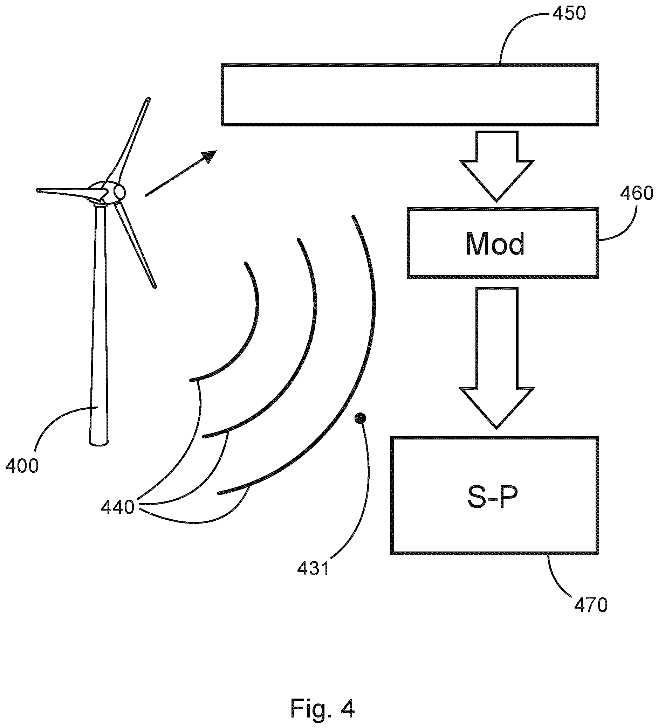

Sofern ein Schalldruck am Immissionspunkt nicht dauerhaft gemessen werden kann, wird vorgeschlagen, den Schalldruck am Immissionspunkt über ein entsprechendes Modell zu ermitteln. Das ist in dem Diagramm der Figur 4 veranschaulicht.

Demnach ist eine Windenergieanlage 400 vorgesehen, die einer Windenergieanlage 300 gemäß Figur 3 und auch einer Windenergieanlage 100 gemäß den Figuren 1 und 2 entsprechen kann. Diese Windenergieanlage 400 wird betrieben und erzeugt dadurch Schall, der durch Schalldruckwellen 440 veranschaulicht ist. Die Schalldruckwellen 440 könnten auch als Schalldruckpegellinien verstanden werden. In dem Diagramm der Figur 4 geht es aber darum, zu veranschaulichen, dass von der Windenergieanlage 400 erzeugter Schall als Schalldruck am Immissionspunkt 431 ankommt und wirkt.

Es wird nun vorgeschlagen, dass Betriebszustände der Windenergieanlage und Wetterdaten und/oder Ausbreitungs-Wetterparameter aufgenommen werden, um davon abhängig den Schalldruckpegel an dem Immissionspunkt 431 zu bestimmen. Der Immissionspunkt 431 könnte beispielsweise einem der Immissionspunkte bzw. Schallimmissionspunkte 331 bis 333 der Figur 3 entsprechen.

Als aufgenommene Betriebszustände, Wetterdaten, Betriebs-Wetterparameter, Ausbreitungs-Wetterparameter und/oder Zustände der Erdatmosphäre können insbesondere Drehzahl, Windgeschwindigkeit, Drucksignal an der Windenergieanlage, Informationen über Regen, die Temperatur an der Windenergieanlage, der Luftdruck an der Windenergieanlage und eine Blattlast verwendet werden, um einige Beispiele zu nennen, die auch vorzugsweise alle zusammen verwendet werden können. Die Verwendung dieser Werte ist nicht auf das veranschaulichende Beispiel Figur 4 beschränkt, sondern auf sämtliche Ausführungsformen übertragbar.

Jedenfalls wird die Verwendung dieser Daten durch den Werteblock 450 veranschaulicht.

Diese Werte werden dann in ein Modell eingegeben, das als Modellblock 460 in Figur 4 veranschaulicht ist.

In dem Modell des Modellblocks 460 werden diese Daten verarbeitet, die durch den Werteblock 450 bereitgestellt wurden. Das Modell kann daraus den Schalldruck am Immissionspunkt 431 bestimmen. Dabei geht auch ein Übertragungszusammenhang ein, der zusätzlich die Schallausbreitung von der Windenergieanlage 400 zu dem Immissionspunkt 431 kennzeichnet. Dieser Übertragungszusammenhang wird somit zusätzlich in dem Modell 460 berücksichtigt, und als Ergebnis ergibt sich ein Schalldruckpegel am Immissionspunkt 431 und das ist durch den Schalldruckpegelblock 470 symbolisiert.

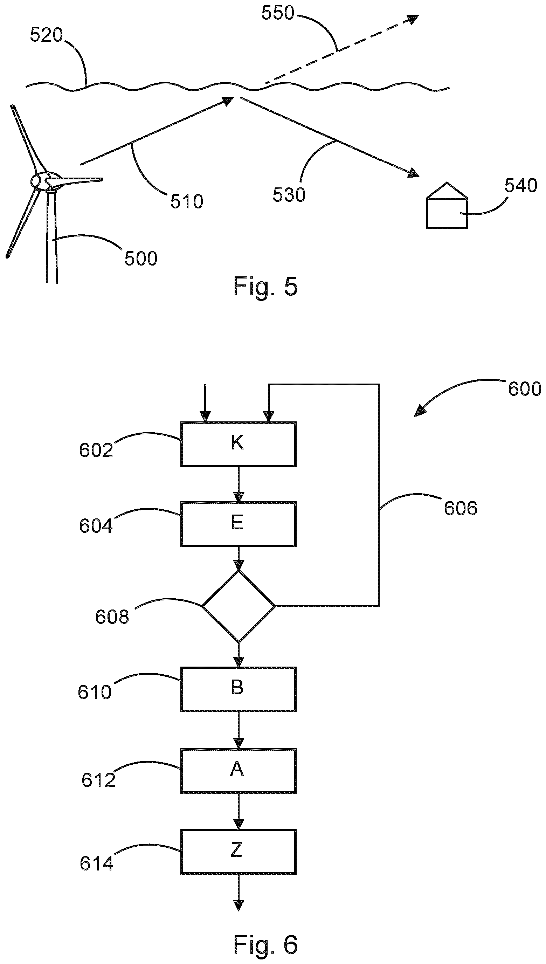

Figur 5 soll Bedeutung und Relevanz eines Übertragungszusammenhangs für Schall erläutern und veranschaulichen. Die Illustration der Figur 5 dient besonders der Anschauung, wobei sehr unterschiedliche physikalische Zusammenhänge und Einflussgrößen relevant sein können.

Zur Illustration zeigt Figur 5 eine Windenergieanlage 500, die betrieben wird und damit zu einer Schallabgabe führt. Daraus resultiert auch eine Schallübertragung, die durch eine erste Schallausbreitungsrichtung 510 veranschaulicht wird. Natürlich findet auch eine Schallausbreitung in andere Richtungen statt.

Veranschaulichend soll Figur 5 in der Illustration eine Atmosphärensituation wiedergeben, bei der eine stabile vertikale Luftschichtung vorliegt. Die wird über den entsprechenden Ausbreitungs-Wetterparameter berücksichtigt. Um das zu erläutern, ist eine Schichtgrenze 520 zur Veranschaulichung eingezeichnet.

Diese Schichtgrenze, die somit eine etwa waagerechte Grenze zwischen zwei Luftschichten symbolisiert, kann dazu führen, dass Schall gemäß der Schallausbreitungsrichtung 510 an dieser Schichtgrenze 520 reflektiert wird. Das ist durch die Reflektionsrichtung 530 illustriert. Dadurch wird gemäß dieser veranschaulichenden Illustration der Schall bzw. ein Teil davon von der Schichtgrenze 520 in Richtung auf einen Immissionspunkt 540 gelenkt. Somit kann in dieser Situation ein sehr hoher Schalldruckpegel an dem Immissionspunkt 540 angenommen werden.

Ebenfalls zur Illustration ist in Figur 5 gestrichelt eine Fortsetzungsrichtung 550 als gestrichelter Pfeil eingezeichnet. Diese Fortsetzungsrichtung 550 soll illustrieren, dass sich der Schall gemäß der Schallausbreitungsrichtung 510 weiter in dieselbe Richtung ausbreiten würde, wenn die Schichtgrenze 520 nicht vorhanden wäre. Das kann besonders dann der Fall sein, wenn keine stabile vertikale Schichtung in der Atmosphäre vorliegt, oder eine entsprechende Schichtgrenze gemäß der Schichtgrenze 520 in viel größerer Höhe angesiedelt wäre. Fehlt also die Schichtgrenze 520 wäre mit einem wesentlich geringeren Schalldruckpegel an dem Immissionspunkt 540 zu rechnen.

Entsprechend kann bei ansonsten gleichen Randbedingungen die Schallimmission an dem Immissionspunkt 540 unterschiedlich hoch ausfallen und das wiederum kann zu unterschiedlichen Reaktionen der Steuerung der Windenergieanlage 500 führen. Die Windenergieanlage 500 kann natürlich auch einer Windenergieanlage 400, 300 oder 100 gemäß einer der Figuren 1 bis 4 entsprechen.

Die Windenergieanlage wird also entsprechend unterschiedlich abgeregelt, wenn dieser Effekt des Übertragungszusammenhangs, der in Figur 5 anhand der Schichtgrenze 520 illustriert wurde, berücksichtigt wird.

Wenn eine Messung der Schallimmission am Immissionspunkt 540 nicht möglich ist, weil kein Sensor vorhanden ist, oder weil der Windpark noch gar nicht existiert, sondern sich noch in der Planungsphase befindet, so kann der Schalldruck am Immissionspunkt 540 mittels eines Modells abgeschätzt werden und die Abschätzung kann dadurch signifikant verbessert werden, dass der Übertragungszusammenhang berücksichtigt wird.

Ebenfalls kann ein solches Verhalten, das hier mit der Figur 5 veranschaulicht wurde, bei der Ermittlung eines Ertrags berücksichtigt werden. Eine solche Berücksichtigung kann natürlich für sämtliche Windenergieanlagen des Windparks vorgenommen werden, sofern diese relevant sind. Bei einem großen Windpark und nur einem Immissionspunkt kann es aber vorkommen, dass nur manche Windenergieanlagen des Windparks zu einem signifikanten Schalldruckpegel am Immissionspunkt führen können. Dann brauchen nur diese relevanten Windenergieanlagen betrachtet zu werden.

Zudem wird vorgeschlagen, eine solche Berücksichtigung des Übertragungszusammenhangs auch zum Projektieren eines Windparks zu verwenden. Eine solche Projektierung ist in einem Ablaufdiagramm 600 in Figur 6 veranschaulicht.

In dem Ablaufdiagramm 600 wird somit zunächst eine Windparkkonfiguration in dem Konfigurierungsblock 602 vorgegeben. Basierend auf dieser Konfigurierung wird dann ein Ertrag ermittelt. Dafür steht repräsentativ der Ertragsblock 604. In dem Ertragsblock 604 kann somit für einen geplanten Windpark ein Ertrag für einen Prognosezeitraum erstellt werden. Der Prognosezeitraum kann insbesondere ein Jahr betragen. Dafür wird eine Wetterprognose verwendet, die ebenfalls für den Prognosezeitraum, also insbesondere für ein Jahr, erstellt wurde. Das kann beispielsweise ein über ein Jahr aufgenommener Wetterverlauf an dem geplanten Aufstellungsort des Windparks sein. Daraus ergeben sich auch die Betriebs-Wetterparameter und die Ausbreitungs-Wetterparameter.

Mit dieser Wetterprognose wird dann nach und nach, also zeitlich nach und nach jeweils eine Leistung des Windparks ermittelt. Diese nach und nach ermittelte Leistung, die sich entsprechend der Wetterprognose verändert, wird über den Prognosezeitraum aufintegriert, also insbesondere über das Jahr, um dadurch eine jährliche Energieproduktion zu ermitteln, die den Ertrag des Windparks darstellt.

Dieser Ertrag hängt somit von den einzelnen Leistungswerten ab, die jeweils für entsprechende Zeitabschnitte bestimmt wurden. Die Leistungswerte hängen wiederum auch davon ab, ob aufgrund einer Schallimmission eine Windenergieanlage des Windparks, oder mehrere Windenergieanlagen des Windparks, abgeregelt werden mussten, und wie stark sie abgeregelt werden mussten.

Um diese schallimmissionsabhängige Abregelung zu berücksichtigen, wird somit auch der Übertragungszusammenhang für Schall für die jeweilige Windenergieanlage bezogen auf den Immissionspunkt berücksichtigt.

Das Ergebnis ist somit ein Ertrag, im Ergebnis nämlich eine Energie, die insofern auch ein Ausgabewert des Ertragsblocks 604 sein kann.

Wenn bei der Projektierung des Windparks dieser auch optimiert werden soll, also möglichst die geeignetste Konfiguration gefunden werden soll, wird der Vorgang der Ermittlung des Ertrags gemäß dem Ertragsblock 604 wiederholt. Dazu wird auch die Konfiguration geändert und somit der Konfigurationsblock 602 ebenfalls wiederholt. Das ist in Figur 6 durch die Abzweigung 606 an dem Abfrageblock 608 verdeutlicht.

Der Abfrageblock kann im einfachsten Fall eine Anzahl durchzuführender Ertragsermittlungen beinhalten, z.B. zehn. Der Abfrageblock 608 kann aber auch eine erste Teilbewertung vornehmen, z.B. prüfen, ob der Ertrag mit geänderten Konfigurationen ansteigt oder abfällt.

Die Konfigurationen können in dem Konfigurationsblock 602 entsprechend in unterschiedliche Richtungen variiert werden, sofern es denn Parameter sind, und entsprechend kann in dem Abfrageblock 608 erkannt werden, ob es überhaupt gelingt, den Ertrag noch zu erhöhen.

Jedenfalls wird es nach einigen Durchläufen in dem Abfrageblock 608 dazu kommen, dass nicht mehr weiter wiederholt wird und stattdessen der Prozess mit einer Bewertung fortgesetzt wird. Diese Bewertung findet in dem Bewertungsblock 610 statt bzw. der Bewertungsblock 610 repräsentiert diesen Bewertungsschritt.

Abhängig von der Bewertung erfolgt dann in einem Auswahlschritt, für den der Auswahlblock 612 repräsentativ steht, das Auswählen der geeignetsten Windparkkonfiguration.

Zu dieser geeignetsten Windparkkonfiguration kann dann im Zertifizierungsblock 614 eine Zertifizierung vorgenommen werden. Eine solche Zertifizierung kann neben der Angabe des Ertrags zu der entsprechenden Konfiguration auch eine Angabe der eingehaltenen Schallimmissionsgrenzen an relevanten Immissionspunkten beinhalten. Wird dann der Windpark in Abhängigkeit von einer solchen Zertifizierung auf Zulassung geprüft, kann diese dabei mit angegebene Schallimmission mit berücksichtigt werden.

Erfindungsgemäß wurde besonders Folgendes erkannt. Bei einer Windparkprojektierung wird eine Schallausbreitungsprognose benötigt, um den Immissionsschutz der anliegenden Anwohner zu gewährleisten. Dieses Vorgehen ist genehmigungsrelevant. Jedenfalls können für ausgewiesene Windparkflächen entsprechende Vorgaben existieren.

Es wurde erkannt, dass die Schallausbreitung stark von meteorologischen Bedingungen abhängt. Diese wurden bisher nicht in den Ausbreitungsmodellen berücksichtigt. Es gibt für eine Schallausbreitung günstige und ungünstige Situationen, besonders stabile/labile/neutrale Wetterlagen.

Es wird vorgeschlagen, dass eine Windenergieanlage und/oder ein Windpark auf Grund von meteorologischen Parametern geregelt wird.

Eine Wetterprognose, die intern erstellt werden kann, wird jeweils für eine Ausbreitungssituation für jeden Windpark simuliert, das über ein vorhandenes Scada-System oder auf einem separaten Rechner simuliert werden kann.

Eine Meteorstation und/oder eine Sensorik auf/an wenigstens einer oder jeder Windenergieanlage werden zur Identifikation der aktuellen meteorologischen Situation genutzt.

Dadurch kann ein Übertragungszusammenhang ermittelt werden, der auch als Ausbreitungsklasse bezeichnet werden kann. Aufgrund der so gefundenen vorliegenden Ausbreitungsklasse kann die Windenergieanlage oder der Windpark standortspezifisch eine optimale Betriebsführung wählen, um unter Einhaltung des Schallkontingents, also unter Einhaltung der Schallvorgaben an den Immissionspunkten, ertragsoptimiert betrieben zu werden. Durch Auswahl der Betriebskennlinie kann die möglichst optimale Betriebsführung gewählt werden.

Dadurch ist eine Optimierung des Windparkwirkungsgrad und damit eine Ertragssteigerung möglich. Auch eine Schallreduktion bei entsprechenden meteorologischen Bedingungen kann erreicht werden.

Dazu wurde besonders erkannt, dass es vorteilhaft ist, eine solche Optimierung auch beim Ermitteln des Ertrags eines Windparks zu berücksichtigen, also bei der Ermittlung des zu erwartenden Ertrags eines noch aufzustellenden Windparks. Und insbesondere ist es sinnvoll, das bei der Projektierung eines Windparks zu berücksichtigen.

Durch eine solche Windparkregelung kann eine signifikante Verringerung von Kompensationskosten erwirkt werden und das kann bei der Ertragsermittlung und/oder der Projektierung eines Windparks mit berücksichtigt werden.

Weiterhin wurde auch Folgendes erkannt.

Der aeroakustische Schall entsteht an einer Windenergieanlage durch die Umströmung der Rotorblätter und die Interaktion mit der Zuströmung. Neben dem Betriebspunkt der Windenergieanlage sind dabei noch der Zustand der Atmosphäre, besonders Temperatur, Dichte, Turbulenz und Scherung, sowie für die Ausbreitung auch noch Geländekomplexität und Bodenbeschaffenheit von Bedeutung.

Für die Emissionsprognose stehen bereits diverse Programme und Vorgehensweisen zur Verfügung. Aus aeroakustischer Sicht wird ein Betriebspunkt durch Windgeschwindigkeit, Blattwinkel, der auch als Pitchwinkel bezeichnet werden kann, und Drehzahl definiert. Zusätzlich gehen die Dichte und Turbulenzintensität mit in das Modell ein.

Alle diese Parameter können bereits mit existierender Sensorik erfasst werden, insbesondere können solche Parameter auch aus einer Beobachtung einer Blattbiegung der Rotorblätter abgeleitet werden.

Zusätzlich wird vorgeschlagen, dass die Rotorblatthinterkanten, jeweils eine der Hauptlärmquellen, mit Drucksensoren ausgestattet werden. Aus einem Signal dieser Drucksensoren kann direkt auf die Emission der Hinterkante geschlossen werden.

Mittels Messung der tatsächlichen Emission kann das Prognose-Modell verbessert werden.

Ist die Windenergieanlage als Quelle charakterisiert, kann eine Immissionsprognose, die ebenfalls Modell-Basiert sein kann, durchgeführt werden.

Es wurde erkannt, dass hierdurch eine Immissionsprognose im laufenden Betrieb möglich ist, welche das gezielte Anfahren von Schallleistungspegeln in Abhängigkeit der Windverhältnisse und Immissionspunkte erlaubt. Für das Ermitteln des zu erwartenden Ertrags wird vorgeschlagen, ein entsprechendes Verhalten der Windenergieanlage zu berücksichtigen.

## Patentansprüche

1. Verfahren zum Vorhersagen eines Ertrags eines bestehenden oder zu errichtenden, mehrere Windenergieanlagen (100) aufweisenden Windparks (112), wobei
jeweils eine Windenergieanlage (100) einen Rotor (106) mit variabler Rotordrehzahl und in ihrem Blattwinkel verstellbaren Rotorblättern (108) aufweist, und wobei die jeweils eine Windenergieanlage (100) eine Anlagensteuerung aufweist, und so ausgebildet ist, dass
- eine Abgabeleistung oder ein Drehmoment mittels einer Einstellkennlinie eingestellt wird,
- die Einstellkennlinie als Drehzahl-/Leistungskennlinie oder Drehzahl-/Drehmomentkennlinie ausgebildet ist, wobei
- die Drehzahl-/Leistungskennlinie einen Zusammenhang zwischen einer erfassten Rotordrehzahl und einer dazu einzustellenden Leistung vorgibt, und
- die Drehzahl-/Drehmomentkennlinie einen Zusammenhang zwischen einer erfassten Rotordrehzahl und einem dazu einzustellenden Drehmoment vorgibt,
- jeweils wenigstens ein variabler Übertragungszusammenhang für Schall berücksichtigt wird, der einen Zusammenhang zwischen einem von der Windenergieanlage ausgehenden Schallsignal und einer an einem Immissionspunkt resultierenden Schallimmission beschreibt, und
- prognostizierte Wetterparameter berücksichtigt werden, wobei die Wetterparameter klassifiziert werden in
- für einen Betrieb der Windenergieanlage relevante Betriebs-Wetterparameter und
- für eine Schallausbreitung relevante Ausbreitungs-Wetterparameter, und wobei
- der Übertragungszusammenhang
- in Abhängigkeit von wenigstens einem der prognostizierten Ausbreitu ngs-Wetterparameter
bestimmt wird, wobei
zum Vorhersagen des Ertrags eine immissionsabhängige Ertragsprognose für den Windpark erstellt wird, wobei
- die Ertragsprognose einen Ertrag prognostiziert, der unter Einhaltung vorgegebener Immissionsgrenzen erzielt werden kann, und
- die Ertragsprognose in Abhängigkeit von wenigstens einem der prognostizierten Betriebs-Wetterparameter für einen Prognosezeitraum mittels eines Prognosemodells erstellt wird, und
- das Prognosemodell
- ein Verhalten wenigstens einer der Windenergieanlagen und/oder des Windparks zur Einhaltung der Immissionsgrenzen modelliert und
- dazu den wenigstens einen Übertragungszusammenhang berücksichtigt.

2. Verfahren nach Anspruch 1, **dadurch gekennzeichnet, dass**
- der Übertragungszusammenhang zusätzlich
- in Abhängigkeit von einer Richtcharakteristik bestimmt wird.

3. Verfahren nach Anspruch 1 oder 2, **dadurch gekennzeichnet, dass**
- eine Wetterprognose erstellt oder empfangen wird und aus der Wetterprognose
- Betriebs-Wetterparameter und
- Ausbreitungs-Wetterparameter abgeleitet werden.

4. Verfahren nach einem der vorstehenden Ansprüche, **dadurch gekennzeichnet, dass**
- Betriebs-Wetterparameter wenigstens einen Parameter umfassen aus der Liste aufweisend:
- eine mittlere Windgeschwindigkeit,
- eine Turbulenzintensität und
- eine Luftdichte und/oder dass
- Ausbreitungs-Wetterparameter wenigstens einen Parameter umfassen aus der Liste aufweisend:
- eine Windscherung,
- eine Windrichtung,
- eine relative Feuchte,
- eine Lufttemperatur
- einen Temperaturgradienten der Lufttemperatur, und
- ein Schichtungsmaß der Atmosphäre.

5. Verfahren nach einem der vorstehenden Ansprüche, **dadurch gekennzeichnet, dass**
- für den vorhergesagten Ertrag durch Unsicherheiten zu erwartende Abweichungen quantifiziert werden, wobei
- die Quantifizierung der durch Unsicherheiten zu erwartenden Abweichungen wenigstens in Abhängigkeit des Übertragungszusammenhangs bestimmt wird, und wobei vorzugsweise wenigstens eine Quantifizierungsmethode gewählt wird aus der Liste aufweisend
- für den vorhergesagten Ertrag wird eine Ertragsunsicherheit bestimmt, die einen Unsicherheitsbereich angibt, um den ein tatsächlich erzeugter Ertrag maximal von dem vorhergesagten Ertrag mit einer vorbestimmbaren Wahrscheinlichkeit abweichen kann,
- für den vorhergesagten Ertrag wird eine Erwartungswahrscheinlichkeit bestimmt, die angibt, mit welcher Wahrscheinlichkeit der tatsächlich erzeugte Ertrag wenigstens den vorhergesagten Ertrag erzielt,
- es wird eine Erwartungswahrscheinlichkeit vorgegeben, für die der vorherzusagende Ertrag bestimmt wird,
- eine Vorhersagegüte bestimmt wird, die ein Maß ist, mit welcher Wahrscheinlichkeit der vorhergesagte Ertrag erreicht wird, und
- für den vorhergesagten Ertrag wird ein Schwankungsmaß, insbesondere eine Standardabweichung oder Varianz, bestimmt, das ein Maß für eine zu erwartende Schwankung des tatsächlich erzeugten Ertrags um den vorhergesagten Ertrag ist.

6. Verfahren nach einem der vorstehenden Ansprüche, **dadurch gekennzeichnet, dass**
- das Prognosemodell ein Steuerverhalten der wenigstens einen Windenergieanlage (100) berücksichtigt, demnach in Abhängigkeit von dem Übertragungszusammenhang eine Einstellkennlinie ausgewählt wird.

7. Verfahren nach einem der vorstehenden Ansprüche, **dadurch gekennzeichnet, dass**
- zum Projektieren die immissionsabhängige Ertragsprognose für wenigstens ein Jahr erstellt wird und
- dafür eine bzw. die Wetterprognose wenigstens für ein Jahr als Prognosezeitraum erstellt wird.

8. Verfahren nach einem der vorstehenden Ansprüche, **dadurch gekennzeichnet, dass**
- für die immissionsabhängige Ertragsprognose in einer Simulation über den Prognosezeitraum nach und nach Betriebszustände wenigstens einer der Windenergieanlagen in Abhängigkeit von der Wetterprognose, insbesondere der Betriebs-Wetterparameter ermittelt werden, wobei
- in Abhängigkeit von dem Übertragungszusammenhang berücksichtigt wird, dass an dem wenigstens einen Immissionspunkt die resultierende Schallimmission einen vorgegebenen Immissionsgrenzwert nicht überschreitet, und
- die Betriebszustände so ermittelt werden, dass der resultierende Immissionsgrenzwert nicht überschritten wird, insbesondere so, dass der resultierende Immissionsgrenzwert erreicht wird.

9. Verfahren nach einem der vorstehenden Ansprüche, **dadurch gekennzeichnet, dass**
- in einer bzw. der Simulation ausgehend von einem Immissionsgrenzwert an dem wenigstens einen Immissionspunkt jeweils
- in Abhängigkeit von dem Übertragungszusammenhang
- wenigstens ein maximal zulässiger Betriebszustand bestimmt wird, insbesondere eine maximal zulässige Drehzahl, und
- unter Verwendung dieses wenigstens einen maximal zulässigen Betriebszustands die immissionsabhängige Ertragsprognose erstellt wird, insbesondere so, dass
- in Abhängigkeit von dem wenigstens einen maximal zulässigen Betriebszustand, insbesondere in Abhängigkeit von der maximal zulässigen Drehzahl, eine Betriebskennlinie ausgewählt wird.

10. Verfahren nach einem der vorstehenden Ansprüche, **dadurch gekennzeichnet, dass**
in einer bzw. der Simulation wenigstens ein Betriebszustand einer ersten Windenergieanlage in Abhängigkeit bestimmt wird von
- der Wetterprognose, insbesondere den Betriebs-Wetterparametern, und
- dem wenigstens einen Übertragungszusammenhang der ersten Windenergieanlage und
- wenigstens einem Übertragungszusammenhang wenigstens einerweiteren Windenergieanlage des Windparks, und/oder
- wenigstens einem Betriebszustand der wenigstens einen weiteren Windenergieanlage.

11. Verfahren nach einem der vorstehenden Ansprüche, **dadurch gekennzeichnet, dass**
- wenigstens ein bzw. der wenigstens eine Betriebszustand einer bzw. der ersten Windenergieanlage und wenigstens ein bzw. der wenigstens eine Betriebszustand wenigstens einer weiteren bzw. der wenigstens einen weiteren Windenergieanlage iterativ voneinander abhängig bestimmt werden.

12. Verfahren nach einem der vorstehenden Ansprüche, **dadurch gekennzeichnet, dass**
- wenigstens ein bzw. der wenigstens eine Betriebszustand der ersten Windenergieanlage (100), oder die Gesamtleistung des Windparks (112), in Abhängigkeit von
- wenigstens einem Wert der Betriebs-Wetterparameter, und
- wenigstens einem Wert der Ausbreitungs-Wetterparameter
- vorbestimmt wird und in Abhängigkeit von diesen Werten in einer Tabelle hinterlegt ist, und in einer bzw. der Simulation ausgelesen wird.

13. Verfahren nach einem der vorstehenden Ansprüche, **dadurch gekennzeichnet, dass**
- wenigstens eine Koordinierungsvorschrift zum Koordinieren der Windenergieanlagen untereinander innerhalb des Windparks vorbestimmt ist, wobei
- die wenigstens eine Koordinierungsvorschrift einen Zusammenhang zwischen Betriebseinstellungen mehrerer Windenergieanlagen untereinander festlegen, und
- zum Erstellen der immissionsabhängigen Ertragsprognose die wenigstens eine Koordinierungsvorschrift berücksichtigt wird, insbesondere in dem Prognosemodell und/oder bei einer bzw. der Simulation berücksichtigt wird.

14. Verfahren nach einem der vorstehenden Ansprüche, **dadurch gekennzeichnet, dass**
in einer bzw. der Simulation
- für mehrere der Windenergieanlagen des Windparks jeweils eine Einzelimmissionsprognose erstellt wird und optional
- aus den Einzelimmissionsprognosen eine Gesamtimmissionsprognose für den Windpark als die Immissionsprognose erstellt wird, insbesondere durch Überlagerung der Einzelimmissionsprognosen, und
- die immissionsabhängige Ertragsprognose in Abhängigkeit von der Einzelimmissionsprognose und ggf. der Gesamtimmissionsprognose erstellt wird.

15. Verfahren nach einem der vorstehenden Ansprüche, **dadurch gekennzeichnet, dass**
- das Erstellen der immissionsabhängigen Ertragsprognose, insbesondere das Prognosemodell, ein Steuerverhalten der Windenergieanlagen berücksichtigt, das in Abhängigkeit von dem Übertragungszusammenhang arbeitet.

16. Verfahren zum Projektieren eines mehrere Windenergieanlagen aufweisenden Windparks, umfassend die Schritte
- in einem Ertragsschritt Ermitteln eines Ertrags des Windparks gemäß einer ersten Windparkkonfiguration durch Verwenden eines Verfahrens nach einem der vorstehenden Ansprüche, wobei der Ertrag für den Prognosezeitraum ermittelt wird,
- in einem Wiederholungsschritt einmalig oder mehrfach Wiederholen des Ertragsschrittes jeweils mit einer geänderten Windparkkonfiguration insbesondere mit geänderten Parametern des Windparks,
- in einem Bewertungsschritt Erstellen einer Bewertung jeder Windparkkonfiguration in Abhängigkeit von dem jeweils ermittelten Ertrag,
- in einem Auswahlschritt Auswählen einer Windparkkonfiguration in Abhängigkeit von der Bewertung und/oder
- in einem Zertifizierungsschritt Erstellen eines Parkzertifikats für den Windpark gemäß der ausgewählten Windparkkonfiguration, wobei optional
- der Wiederholungsschritt ausgelassen wird, und das Zertifikat für den Windpark gemäß der ersten Windparkkonfiguration erstellt wird.

## Claims

1. Method for forecasting a yield of a wind park (112) which exists or which is intended to be erected and which has a plurality of wind turbines (100), wherein
in each case a wind turbine (100) has a rotor (106) having a variable rotor speed and rotor blades (108) which can be adjusted in terms of their blade angle, and wherein the wind turbine (100) in each case has an installation control and is constructed in such a manner that
- a power output or a torque is adjusted by means of an adjustment characteristic line,
- the adjustment characteristic line is in the form of a speed/power characteristic line or speed/torque characteristic line, wherein
- the speed/power characteristic line predetermines a relationship between a detected rotor speed and a power which is intended to be adjusted, and
- the speed/torque characteristic line predetermines a relationship between a detected rotor speed and a torque which is intended to be adjusted,
- in each case at least one variable transmission relationship for noise is taken into account and describes a relationship between a noise signal which is emitted by the wind turbine and a noise imission which results at an imission point, and
- predicted weather parameters are taken into account,
wherein the weather parameters are classified into
- operating weather parameters which are relevant to operation of the wind turbine, and
- propagation weather parameters which are relevant to sound propagation, and wherein
- the transmission relationship is determined
- in accordance with at least one of the predicted propagation weather parameters, wherein
in order to forecast the yield an imission-dependent yield forecast is produced for the wind park, wherein
- the yield forecast predicts a yield which can be achieved with predetermined imission limits being complied with, and
- the yield forecast is produced in accordance with at least one of the predicted operating weather parameters for a forecast time period by means of a forecasting model, and
- the forecasting model
- models a behaviour of at least one of the wind turbines and/or the wind park in order to comply with the imission limits, and,
- to this end, takes into account the at least one transmission relationship.

2. Method according to claim 1, **characterised in that**
- the transmission relationship is additionally determined
- in accordance with a directional characteristic.

3. Method according to claim 1 or 2,
**characterised in that**
- a weather forecast is produced or received and,
- operating weather parameters and
- propagation weather parameters are derived from the weather forecast.

4. Method according to any one of the preceding claims,
**characterised in that**
- operating weather parameters comprise at least one parameter from the list having:
- a mean wind speed,
- a turbulence intensity and
- an air density and/or **in that**
- propagation weather parameters comprise at least one parameter from the list having:
- a wind shear,
- a wind direction,
- a relative humidity,
- an air temperature,
- a temperature gradient of the air temperature, and
- a stratification measurement of the atmosphere.

5. Method according to any one of the preceding claims, **characterised in that**
- for the forecast yield deviations which may be anticipated as a result of uncertainties are quantified, wherein
- the quantification of the deviations which may be anticipated as a result of uncertainties is determined at least in accordance with the transmission relationship, and wherein at least one quantification method is preferably selected from the list having
- for the forecast yield there is determined a yield uncertainty which indicates an uncertainty range by which a yield which is actually produced can deviate to the maximum extent from the forecast yield with a predeterminable probability,
- for the forecast yield there is determined an anticipation probability which indicates the probability with which the yield actually produced at least achieves the forecast yield,
- there is predetermined an anticipation probability, for which the yield which is intended to be forecast is determined,
- a forecast quality which is a measurement of the probability of the forecast yield being achieved is determined, and
- for the forecast yield there is determined a fluctuation rate, in particular a standard deviation or variance, which is a measurement for a fluctuation, which may be anticipated, of the yield which is actually produced around the forecast yield.

6. Method according to any of the preceding claims, **characterised in that**
- the prognosis model takes into account a control behaviour of the at least one wind turbine (100), accordingly an adjustment characteristic line is selected in accordance with the transmission relationship.

7. Method according to any one of the preceding claims, **characterised in that**
- for planning, the immission-dependent yield prediction for at least one year is produced, and,
- to this end, a or the weather forecast for at least one year is produced as a forecast time period.

8. Method according to any one of the preceding claims, **characterised in that**,
- for the imission-dependent yield forecast in a simulation over the forecast time period, operating states of at least one of the wind turbines are established gradually in accordance with the weather forecast, in particular the operating weather parameters, wherein
- depending on the transmission relationship it is taken into account that, at the at least one imission point, the resulting noise imission does not exceed a predetermined imission limit value, and
- the operating states are established in such a manner that the resulting imission limit value is not exceeded, in particular in such a manner that the resulting imission limit value is reached.

9. Method according to any one of the preceding claims, **characterised in that**
- in a or the simulation starting from an imission limit value at the at least one immision point in each case
- in accordance with the transmission relationship,
- at least one maximum permissible operating state is determined, in particular a maximum permissible speed, and
- using this at least one maximum permissible operating state, the imission-dependent yield forecast is produced, in particular in such a manner that - in accordance with the at least one maximum permissible operating state, particularly depending on the maximum permissible speed, an operating characteristic line is selected.

10. Method according to any one of the preceding claims, **characterised in that**
- in a or the simulation at least one operating state of a first wind turbine is determined in accordance with
- the weather forecast, in particular the operating weather parameters, and
- the at least one transmission relationship of the first wind turbine, and
- at least one transmission relationship of at least one additional wind turbine of the wind park and/or
- at least one operating state of the at least one additional wind turbine.

11. Method according to any one of the preceding claims, **characterised in that**
- at least one or the at least one operating state of a or the first wind turbine and at least one or the at least one operating state of at least one additional or the at least one additional wind turbine are determined iteratively in a mutually dependent manner.

12. Method according to any one of the preceding claims, **characterised in that**
- at least one or the at least one operating state of the first wind turbine (100) or the overall power of the wind park (112) is predetermined in accordance with
- at least one value of the operating weather parameters and
- at least one value of the propagation weather parameters
- and is stored in a table in accordance with these values and read out in a or the simulation.

13. Method according to any one of the preceding claims, **characterised in that**
- at least one coordination regulation for coordinating the wind turbines with each other within the wind park is predetermined, wherein
- the at least one coordination regulation determines a relationship between operating adjustments of a plurality of wind turbines relative to each other, and
- in order to produce the imission-dependent yield forecast the at least one coordination provision is taken into account, in particular taken into account in the forecast model and/or with a or the simulation.

14. Method according to any one of the preceding claims, **characterised in that**
in a or the simulation
- for a plurality of the wind turbines of the wind park an individual imission forecast is produced, and optionally
- from the individual imission forecasts an overall imission forecast for the wind park is produced as the imission forecast, in particular by superimposing the individual imission forecasts, and
- the imission-dependent yield forecast is produced in accordance with the individual imission forecast and where applicable the overall imission forecast.

15. Method according to any one of the preceding claims, **characterised in that**
- the production of the imission-dependent yield forecast, in particular the forecast model, takes into account a control behaviour of the wind turbines which operates in accordance with the transmission relationship.

16. Method for planning a wind park having a plurality of wind turbines, composing the steps of:
- in a yield step establishing a yield of the wind park according to a first wind park configuration by using a method according to any one of the preceding claims, wherein the yield is established for the forecast time period,
- in a repetition step, repeating the yield step one or more times with a changed wind park configuration each time, in particular with changed parameters of the wind park,
- in an evaluation step, producing an evaluation of each wind park configuration depending on the yield established in each case,
- in a selection step, selecting a wind park configuration depending on the evaluation and/or
- in a certification step producing a park certificate for the wind park in accordance with the selected wind park configuration, wherein optionally
- the repetition step is omitted and the certificate for the wind park is produced according to the first wind park configuration.

## Revendications

1. Procédé de prévision d'un rendement d'un parc éolien (112) présentant une éolienne existante ou une éolienne à construire, plusieurs éoliennes (100), dans lequel
une éolienne (100) présente respectivement un rotor (106) avec une vitesse de rotation de rotor variable et des pales de rotor (108) dont l'angle de pale peut être ajusté, et dans lequel l'éolienne (100) présente respectivement une commande d'installation et est réalisée de telle sorte que
- une puissance de sortie ou un couple de rotation est réglée ou réglé au moyen d'une courbe caractéristique de réglage,
- la courbe caractéristique de réglage est réalisée en tant que courbe caractéristique de vitesse de rotation/puissance ou que courbe caractéristique de vitesse de rotation/couple de rotation, dans lequel
- - la courbe caractéristique de vitesse de rotation/de puissance spécifie un lien entre la vitesse de rotation de rotor détectée et une puissance à régler, et
- - la courbe caractéristique de vitesse de rotation/couple de rotation spécifie un lien entre une vitesse de rotation de rotor détectée et un couple de rotation à régler,
- au moins un lien de transmission variable pour du bruit est respectivement pris en compte, lequel décrit un lien entre un signal sonore partant de l'éolienne et une immission sonore résultant sur un point d'immissions, et
- des paramètres météorologiques prévus sont pris en compte, dans lequel les paramètres météorologiques sont classés en
- - des paramètres météorologiques de fonctionnement importants pour le fonctionnement de l'éolienne, et
- - des paramètres météorologiques de propagation importants pour la propagation de sons,
et dans lequel
- le lien de transmission est défini
- - en fonction d'au moins un des paramètres météorologiques de propagation prévu,
dans lequel
un pronostic de rendement dépendant des immissions pour le parc éolien est établi pour prédire le rendement, dans lequel
- le pronostic de rendement prévoit un rendement, qui peut être atteint en respectant des limites d'immission spécifiées, et
- le pronostic de rendement est établi en fonction d'au moins un des paramètres météorologiques de fonctionnement prévus pour une période de temps de pronostic au moyen d'un modèle de pronostic, et
- le modèle de pronostic
- - modélise un comportement d'au moins une des éoliennes et/ou du parc éolien pour respecter les limites d'immissions, et
- - tient compte à cet effet de l'au moins un lien de transmission.

2. Procédé selon la revendication 1, **caractérisé en ce que**
- le lien de transmission est défini en supplément
- - en fonction d'une caractéristique directionnelle.

3. Procédé selon la revendication 1 ou 2, **caractérisé en ce que**
- un pronostic météorologique est établi ou reçu et sont déduits du pronostic météorologique
- - des paramètres météorologiques de fonctionnement et
- - des paramètres météorologiques de propagation.

4. Procédé selon l'une quelconque des revendications précédentes, **caractérisé en ce que**
- des paramètres météorologiques de fonctionnement comprennent au moins un paramètre issu de la liste présentant :
- - une vitesse du vent moyenne,
- - une intensité de turbulence, et
- - une densité de l'air et/ou que
- des paramètres météorologiques de propagation comprennent au moins un paramètre issu de la liste présentant :
- - un cisaillement du vent,
- - un sens du vent,
- - une humidité relative,
- - une température de l'air,
- - un gradient de température de la température de l'air, et
- - une mesure de stratification de l'atmosphère.

5. Procédé selon l'une quelconque des revendications précédentes, **caractérisé en ce que**
- des écarts attendus liés à des incertitudes sont quantifiés pour le rendement prédit, dans lequel
- la quantification des écarts attendus liés à des incertitudes est définie au moins en fonction du lien de transmission, et dans lequel de préférence au moins un procédé de quantification est choisi parmi la liste présentant
- - la définition pour le rendement prédit d'une incertitude de rendement, qui indique une plage d'incertitude, de laquelle un rendement réellement généré peut s'écarter au maximum du rendement prédit avec une probabilité prédéfinissable,
- - la définition pour le rendement prédit d'une probabilité attendue qui indique la probabilité avec laquelle le rendement réellement généré atteint au moins le rendement prédit,
- - la spécification d'une probabilité attendue, pour laquelle le rendement à prédire est défini,
- - la définition d'une qualité de prédiction, qui est une mesure de la probabilité selon laquelle le rendement prédit est atteint, et
- - la définition, pour le rendement prédit, d'une mesure de fluctuation, en particulier d'un écart standard ou d'une variable qui est une mesure d'une fluctuation attendue du rendement réellement généré du rendement prédit.

6. Procédé selon l'une quelconque des revendications précédentes, **caractérisé en ce que**
- le modèle de prévision tient compte d'un comportement de commande de l'au moins une éolienne (100), une courbe caractéristique de réglage est choisie par voie de conséquence en fonction du lien de transmission.

7. Procédé selon l'une quelconque des revendications précédentes, **caractérisé en ce que**
- le pronostic de rendement dépendant des immissions est établi pour au moins une année aux fins de la projection, et
- un ou le pronostic météorologique est établi au moins pour une année en tant que période de temps de pronostic à cet effet.

8. Procédé selon l'une quelconque des revendications précédentes, **caractérisé en ce que**
- des états de fonctionnement d'au moins une des éoliennes sont déterminés peu à peu en fonction du pronostic météorologique, en particulier des paramètres météorologiques de fonctionnement pour le pronostic de rendement dépendant des immissions dans une simulation sur la période de temps du pronostic, dans lequel
- est pris en compte en fonction du lien de transmission le fait que les immissions sonores en résultant ne dépassent pas une valeur limite d'immissions spécifiée sur l'au moins un point d'immissions, et
- les étapes de fonctionnement sont déterminées de telle sorte que la valeur limite d'immissions en résultant n'est pas dépassée, en particulier de telle sorte que la valeur limite d'immissions en résultant est atteinte.

9. Procédé selon l'une quelconque des revendications précédentes, **caractérisé en ce que**
- dans une ou la simulation en partant d'une valeur limite d'immissions sur l'au moins un point d'immissions, respectivement
- - en fonction du lien de transmission
- - au moins un état de fonctionnement maximal admissible est défini, en particulier une vitesse de rotation maximale admissible, et
- - le pronostic de rendement dépendant des immissions est établi en utilisant ledit au moins un état de fonctionnement maximal admissible, en particulier de telle sorte
- - qu'une courbe caractéristique de fonctionnement est choisie en fonction de l'au moins un état de fonctionnement maximal admissible, en particulier en fonction de la vitesse de rotation maximale admissible.

10. Procédé selon l'une quelconque des revendications précédentes, **caractérisé en ce que**
au moins un état de fonctionnement d'une première éolienne est défini dans une ou la simulation en fonction
- du pronostic météorologique, en particulier des paramètres météorologiques de fonctionnement, et
- de l'au moins un lien de transmission de la première éolienne et
- d'au moins un lien de transmission d'au moins une autre éolienne du parc éolien, et/ou
- d'au moins un état de fonctionnement de l'au moins une autre éolienne.

11. Procédé selon l'une quelconque des revendications précédentes, **caractérisé en ce que**
- au moins un ou l'au moins un état de fonctionnement d'une ou de la première éolienne et au moins un ou l'au moins un état de fonctionnement d'au moins une autre ou de l'au moins une autre éolienne sont définis l'un en fonction de l'autre de manière itérative.

12. Procédé selon l'une quelconque des revendications précédentes, **caractérisé en ce que**
- au moins un ou l'au moins un état de fonctionnement de la première éolienne (100) ou la puissance totale du parc éolien (112)
- est prédéfini ou prédéfinie en fonction
- - d'au moins une valeur des paramètres météorologiques de fonctionnement et
- d'au moins une valeur des paramètres météorologiques de propagation
- et est enregistré ou enregistrée dans un tableau en fonction desdites valeurs et est lu ou lue dans une ou la simulation.

13. Procédé selon l'une quelconque des revendications précédentes, **caractérisé en ce que**
- au moins une prescription de coordination est prédéfinie pour coordonner les éoliennes entre elles au sein du parc éolien, dans lequel
- - l'au moins une prescription de coordination fixe un lien entre des réglages de fonctionnement de plusieurs éoliennes entre elles et
- l'au moins une prescription de coordination est prise en compte pour établir le pronostic de rendement dépendant des immissions, en particulier dans le modèle de pronostic et/ou lors d'une ou de la simulation.

14. Procédé selon l'une quelconque des revendications précédentes, **caractérisé en ce que**
dans une ou la simulation
- respectivement un pronostic d'immissions individuel est établi pour plusieurs des éoliennes du parc éolien et en option
- un pronostic d'immissions total pour le parc éolien est établi en tant que le pronostic d'immissions à partir des pronostics d'immissions individuels, en particulier par superposition des pronostics d'immissions individuels, et
- le pronostic de rendement dépendant des immissions est établi en fonction du pronostic d'immissions individuel et éventuellement du pronostic d'immissions total.

15. Procédé selon l'une quelconque des revendications précédentes, **caractérisé en ce que**
- l'établissement du pronostic de rendement dépendant des immissions, en particulier le modèle de pronostic, tient compte d'un comportement de commande des éoliennes, qui travaille en fonction du lien de transmission.

16. Procédé de projection d'un parc éolien présentant plusieurs éoliennes, comprenant les étapes
- - lors d'une étape de rendement, de détermination d'un rendement du parc éolien selon une première configuration de parc éolien en utilisant un procédé selon l'une quelconque des revendications précédentes, dans lequel le rendement est déterminé pour la période de temps de pronostic,
- - lors d'une étape de répétition, de répétition une fois ou à maintes reprises de l'étape de rendement respectivement avec une configuration de parc éolien modifiée en particulier avec des paramètres modifiés du parc éolien,
- lors d'une étape d'évaluation, d'établissement d'une évaluation de chaque configuration de parc éolien en fonction du rendement respectivement déterminé,
- lors d'une étape de sélection, de sélection d'une configuration de parc éolien en fonction de l'évaluation, et/ou
- lors d'une étape de certification, d'établissement d'un certificat de parc pour le parc éolien selon la configuration de parc éolien sélectionnée, dans lequel en option
- l'étape de répétition est omise et le certificat pour le parc éolien est établi selon la première configuration de parc éolien.
